(19) Europäisches Patentamt
European Patent Office
Office européen des brevets

(11) **EP 3 272 472 A2**

(12) # EUROPEAN PATENT APPLICATION

(43) Date of publication:
**24.01.2018 Bulletin 2018/04**

(51) Int Cl.:
***B25J 9/16*** ^(2006.01)

(21) Application number: **17182316.4**

(22) Date of filing: **20.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.07.2016 JP 2016144956**

(71) Applicant: **Seiko Epson Corporation**
**Tokyo 160-8801 (JP)**

(72) Inventors:
• **Matsuura, Kenji**
  **Nagano, 392-8502 (JP)**
• **So, Ko**
  **Nagano, 392-8502 (JP)**

(74) Representative: **Hoffmann Eitle**
**Patent- und Rechtsanwälte PartmbB**
**Arabellastraße 30**
**81925 München (DE)**

(54) **CONTROL DEVICE, ROBOT, AND ROBOT SYSTEM**

(57)    A control device (5) includes: a control portion (51) and a receiving portion (52), in which the control portion (51) is capable of allowing a robot (1) to perform two or more works selected from first work of performing calibration between a coordinate system of a first imaging portion (3) having an imaging function and a coordinate system of a robot (1), second work of performing calibration between a coordinate system of a second imaging portion (2) having an imaging function and a coordinate system of the robot (1), third work of calculating a posture of a virtual standard surface that corresponds to a work surface on which the robot (1) works, fourth work of calculating a distance between the first imaging portion (3) and a standard point of the robot (1), and fifth work of calculating a distance between an end-effector (102) and the standard point, based on one input command received by the receiving portion (52).

FIG. 1

EP 3 272 472 A2

**Description**

BACKGROUND

1. Technical Field

The present invention relates to a control device, a robot, and a robot system.

2. Related Art

From the related art, a robot system which is used in work of gripping, transporting, and assembling a target, such as an electronic component, is known. The robot system includes: a robot including a robot arm having a plurality of arms, and a hand provided at a tip end thereof; an imaging portion, such as a camera; and a control device which controls each of the robot and the imaging portion. In a robot system having such a configuration, for example, the robot performs various types of work with respect to the target with the hand based on an image of the target captured by the imaging portion.

Here, it is necessary to calibrate the imaging portion which acquires a correction parameter for converting a position and a posture on the image of the target captured by the imaging portion into a value in a robot coordinate system such that the robot accurately performs the work with respect to the target based on the image captured by the imaging portion.

For example, in JP-A-8-210816, processing of acquiring the parameter which converts a position on the image into a value in the robot coordinate system by using a robot-visual sensor system (robot system) is described. The robot-visual sensor system described in JP-A-8-210816 includes: a robot including a robot arm and a touch-up hand provided at a tip end thereof; a visual sensor (imaging portion) provided at the tip end of the robot arm; and a calibration tool provided with a plane having three standard points and four reference points.

In the processing described in JP-A-8-210816, first, by bringing the touch-up hand into contact with the three standard points, the position and the posture of the calibration tool in the robot coordinate system are specified. After this, by capturing the four reference points using the visual sensor by driving the robot arm, and by determining the position of the calibration tool in an image coordinate system of the imaging portion, the parameter which converts a position on the image into a value in the robot coordinate system is acquired.

However, in the processing described in JP-A-8-210816, as described above, by bringing the touch-up hand into contact with the three standard points, the position of the calibration tool in the robot coordinate system is specified. In the calibration of the related art, in general, since a worker confirms a contact state between the calibration tool and the touch-up hand, differences in determination of the contact state are generated according to a worker. Therefore, it is difficult to specify the position and the posture of the calibration tool with high accuracy, and when a worker desires to accurately perform determination of the contact state, there is a problem that it takes a long time to specify the position and the posture of the calibration tool. In addition, a problem that there are a lot of work that is directly performed by the worker, and it takes a longer time to specify the position and the posture of the calibration tool as the number of robots, cameras, and standard surfaces which are calibration target increases, becomes serious.

SUMMARY

An advantage of some aspects of the invention is to solve at least a part of the problems described above, and the invention can be implemented as the following configurations.

A control device according to an aspect of the invention includes: a control portion which operates a robot including a movable portion capable of being provided with an end-effector that works with respect to a target; and a receiving portion which receives an input command and outputs a signal based on the received input command to the control portion, in which the control portion is capable of allowing the robot to perform two or more works selected from first work of performing calibration between a coordinate system of a first imaging portion having an imaging function and a coordinate system of the robot, second work of performing calibration between a coordinate system of a second imaging portion having an imaging function and a coordinate system of the robot, third work of calculating a posture of a virtual standard surface that corresponds to a work surface on which the robot works, fourth work of calculating a distance between the first imaging portion and a standard point of the robot, and fifth work of calculating a distance between the end-effector and the standard point, based on one input command received by the receiving portion.

According to the control device according to the aspect of the invention, since it is possible to collectively perform the plural types of work selected from the first work to the fifth work by the control portion by one input command input to the receiving portion, it is possible to increase work efficiency. In addition, the operation by the worker is also easy.

In the control device according to the aspect of the invention, it is preferable that the first imaging portion is provided in the movable portion.

With this configuration, for example, it is possible to allow the robot to accurately perform the work with respect to the target based on the image captured by the first imaging portion.

In the control device according to the aspect of the invention, it is preferable that the second imaging portion is provided at a place other than the movable portion.

With this configuration, for example, it is possible to allow the robot to accurately perform the work with respect to the target based on the image captured by the second imaging portion. In addition, it is possible to easily grasp whether or not the target is accurately gripped or the like by the end-effector.

In the control device according to the aspect of the invention, it is preferable that the control portion is capable of allowing the robot to perform the first work, the second work, the third work, the fourth work, and the fifth work, based on the one input command received by the receiving portion.

With this configuration, since all of the first work to the fifth work can be collectively performed, it is possible to improve work efficiency of all of the first work to the fifth work.

In the control device according to the aspect of the invention, it is preferable that the receiving portion is capable of receiving an instruction that at least one of the first work, the second work, the third work, the fourth work, and the fifth work is not selectively performed.

With this configuration, it is possible to omit the performing of desirable work among the first work to the fifth work, and to efficiently perform only the work desired to be performed.

In the control device according to the aspect of the invention, it is preferable that the control portion outputs a signal that displays a setting screen for setting the work contents of each of the first work, the second work, the third work, the fourth work, and the fifth work, based on the one input command received by the receiving portion.

with this configuration, it is possible to display a setting screen (window) for setting the work contents of each work in display equipment including the screen. Therefore, the worker can simply set the work contents by operating the displayed setting screen.

In the control device according to the aspect of the invention, it is preferable that the end-effector is attached to a member included in the movable portion, the member included in the movable portion is rotatable around a rotation axis, and the standard point is positioned on the rotation axis.

With this configuration, for example, by performing the fifth work, since the distance between the end-effector and the standard point (axial coordinates 06) positioned in the member (sixth arm) included in the movable portion (robot arm) is acquired, it is possible to accurately perform the work with respect to the target by the robot.

A robot according to an aspect of the invention is controlled by the control device according to the aspect of the invention.

According to the robot according to the aspect of the invention, it is possible to accurately perform various types of work.

A robot system according to an aspect of the invention includes: the control device according to the aspect of the invention; and a robot which is controlled by the control device.

According to the robot system according to the aspect of the invention, the robot can accurately perform various types of work.

BRIEF DESCRIPTION OF THE DRAWINGS

The invention will be described with reference to the accompanying drawings, wherein like numbers reference like elements.

Fig. 1 is a schematic perspective view illustrating a robot system according to an appropriate embodiment of the invention.
Fig. 2 is a schematic view of a robot illustrated in Fig. 1.
Fig. 3 is a block diagram of the robot system illustrated in Fig. 1.
Fig. 4 is a view illustrating a window displayed on a screen included in display equipment illustrated in Fig. 3.
Fig. 5 is a flowchart illustrating a calibration method of an imaging portion which uses the robot system illustrated in Fig. 1.
Fig. 6 is a view illustrating the window which is used during the calibration of the imaging portion.
Fig. 7 is a view illustrating the window (setting screen) which is used during the calibration of the imaging portion.
Fig. 8 is a plan view of a calibration member which is used in the calibration of the imaging portion.
Fig. 9 is a schematic view of the robot for describing the calibration of a mobile camera on a supply stand illustrated in Fig. 5.
Fig. 10 is a schematic view of the robot for describing the calibration of an end-effector illustrated in Fig. 5.
Fig. 11 is a view for describing the calibration of the end-effector illustrated in Fig. 5.
Fig. 12 is a view for describing the calibration of the end-effector illustrated in Fig. 5.
Fig. 13 is a view for describing the calibration of the end-effector illustrated in Fig. 5.
Fig. 14 is a coordinate view for describing the calibration of the end-effector illustrated in Fig. 5.
Fig. 15 is a flowchart for describing the calibration of a second fixed camera illustrated in Fig. 5.
Fig. 16 is a flowchart for describing processing of specifying a standard surface illustrated in Fig. 15.
Fig. 17 is a view for describing determination of whether or not the size of a first standard marker is within a threshold value in the processing of specifying the standard surface.
Fig. 18 is a schematic view of the robot for describing the specifying of the standard surface that corresponds to an inspection surface of an inspection stand illustrated in Fig. 5.
Fig. 19 is a flowchart for describing the specifying of the standard surface that corresponds to the inspection surface of the inspection stand illustrated in Fig

5.

Fig. 20 is a flowchart for describing the calibration of the mobile camera on the inspection stand illustrated in Fig. 5.

Fig. 21 is a flowchart for describing processing of acquiring offset components illustrated in Fig. 20.

Fig. 22 is a view for describing processing of acquiring offset components Δu, Δv, and Δw illustrated in Fig. 21.

Fig. 23 is a view for describing processing of acquiring offset components Δx and Δy illustrated in Fig. 21.

Fig. 24 is a view for describing the processing of acquiring the offset components Δx and Δy illustrated in Fig. 21.

Fig. 25 is a view for describing the processing of acquiring the offset components Δx and Δy illustrated in Fig. 21.

Fig. 26 is a view for describing the processing of acquiring the offset components Δx and Δy illustrated in Fig. 21.

Fig. 27 is a view for describing the processing of acquiring the offset components Δx and Δy illustrated in Fig. 21.

Fig. 28 is a coordinate view for describing the processing of acquiring the offset components Δx and Δy illustrated in Fig. 21.

Fig. 29 is a view for describing processing of acquiring an offset component Δz illustrated in Fig. 21.

DESCRIPTION OF EXEMPLARY EMBODIMENTS

Hereinafter, a control device, a robot, and a robot system according to the invention will be described based on appropriate embodiments illustrated in the attached drawings.

Robot System

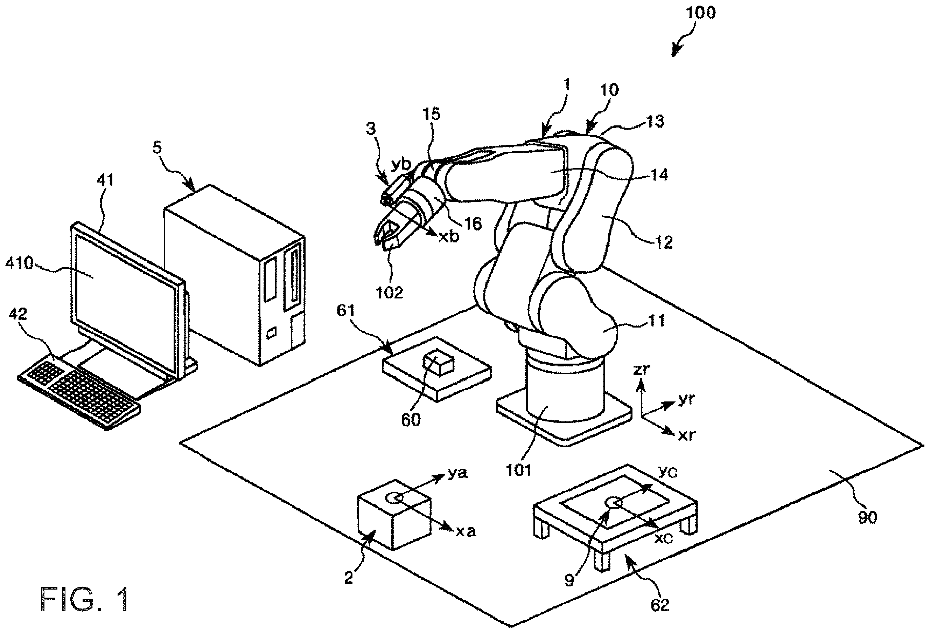

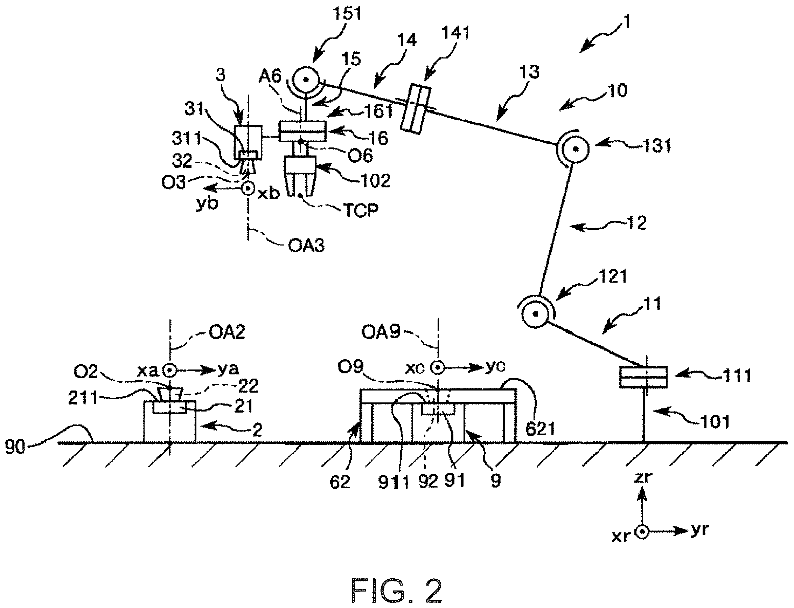

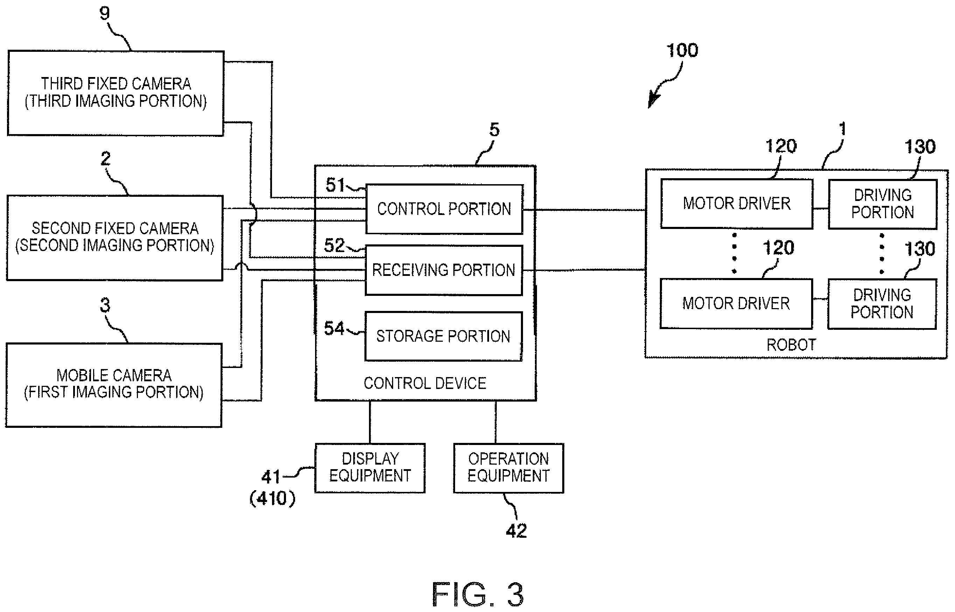

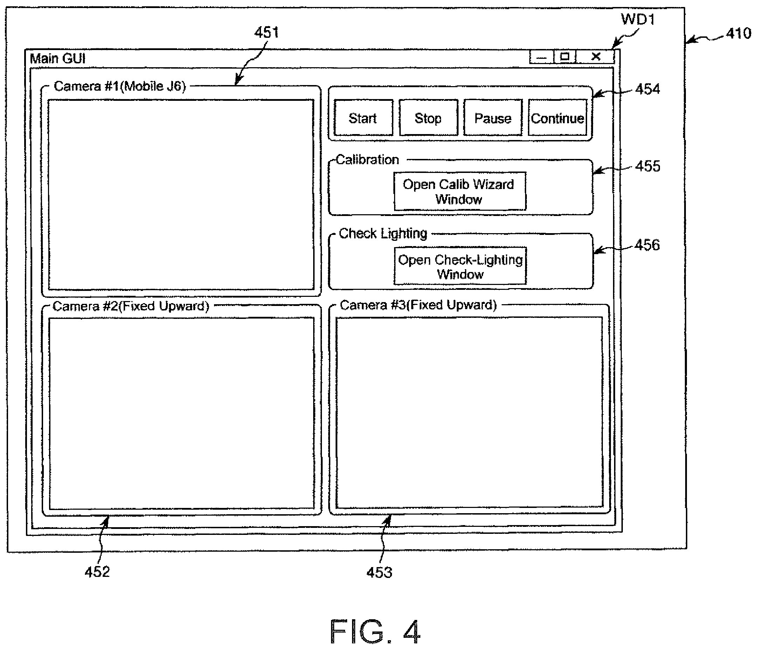

Fig. 1 is a schematic perspective view illustrating the robot system according to an appropriate embodiment of the invention. Fig. 2 is a schematic view of the robot illustrated in Fig. 1. Fig. 3 is a block diagram of the robot system illustrated in Fig. 1. Fig. 4 is a view illustrating a window displayed on a screen included in display equipment illustrated in Fig. 3.

In addition, hereinafter, for convenience of the description, an upper side in Fig. 2 is referred to as "up" or "upper part", and a lower side is referred to as "down" or "lower part". In addition, the upward-and-downward direction in Fig. 2 is referred to as "vertical direction", a surface which intersects the vertical direction is referred to as "horizontal surface", and the direction parallel to the horizontal surface is referred to as "horizontal direction". Here, "horizontal" described in the specification also includes a case of being inclined within a range of equal to or less than 5° with respect to a horizontal state not being limited to being completely horizontal. In addition, "vertical" described in the specification also includes a case of being inclined within a range of equal to or less than 5° with respect to a vertical state not being limited to being completely vertical. In addition, a base side of the robot in Fig. 2 is referred to as "base end", and an opposite side (hand side) is referred to as "tip end".

A robot system 100 illustrated in Fig. 1 is, for example, a device which is used in work of gripping, transporting, and assembling a target 60, such as an electronic component and an electronic device.

As illustrated in Fig. 1, the robot system 100 includes: a robot 1 including a robot arm 10; a second fixed camera 2 (second imaging portion) which has an imaging function; a third fixed camera 9 (third imaging portion) which has an imaging function; a mobile camera 3 (first imaging portion) which has an imaging function; and a control device 5 (calibration device). The second fixed camera 2 and the third fixed camera 9 are respectively fixed to the inside of a work region 90. The mobile camera 3 is attached to the robot 1. The control device 5 controls each of the robot 1, the second fixed camera 2, the third fixed camera 9, and the mobile camera 3.

In addition, in the embodiment, in the work region 90, a supply stand 61 (pickup place) in which the target 60 is supplied to the robot 1 by a worker, and an inspection stand 62 (inspection stage) on which the target 60 is inspected or the like, are provided. Each of the supply stand 61 and the inspection stand 62 is provided within a driving range of the robot arm 10 of the robot 1.

Hereinafter, each portion of the robot system 100 will be described in order.

Robot

The robot 1 illustrated in Figs. 1 and 2 can perform the work of gripping, transporting, and assembling the target 60.

The robot 1 is a 6-axis vertical articulated robot, and includes a base 101, a robot arm 10 which is connected to the base 101, and a hand 102 (tool) which is an end-effector provided at the tip end part of the robot arm 10. In addition, as illustrated in Fig. 3, the robot 1 includes a plurality of driving portions 130 and a plurality of motor drivers 120 which generate power that drives the robot arm 10.

The base 101 is a part which attaches the robot 1 to a predetermined location in the work region 90.

The robot arm 10 includes a first arm 11 (arm), a second arm 12 (arm), a third arm 13 (arm), a fourth arm 14 (arm), a fifth arm 15 (arm), and a sixth arm 16 (arm). The first arm 11 is connected to the base 101, and the first arm 11, the second 12, the third 13, the fourth 14, the fifth 15, and the sixth 16 are linked to each other in order from the based end side to the tip end side.

As illustrated in Fig. 2, the first arm 11 includes a rotation axis member 111 linked to the base 101, and can rotate around a rotation axis of the rotation axis member 111 with respect to the base 101. In addition, the second arm 12 includes a rotation axis member 121 linked to the first arm 11, and can rotate around a rotation axis of the rotation axis member 121 with respect to the first arm 11. In addition, the third arm 13 includes a rotation axis member 131 linked to the second arm 12, and can rotate around a rotation axis of the rotation axis member 131 with respect to the second arm 12. In addition, the fourth arm 14 includes a rotation axis member 141 linked to the third arm 13, and can rotate around a rotation axis of the rotation axis member 141 with respect to the third arm 13. In addition, the fifth arm 15 includes a rotation axis member 151 linked to the fourth arm 14, and can rotate around a rotation axis of the rotation axis member 151 with respect to the fourth arm 14. In addition, the sixth arm 16 includes a rotation axis member 161 linked to the fifth arm 15, and can rotate around a rotation axis A6 of the rotation axis member 161 with respect to fifth arm 15. Here, a point (center of the tip end surface of the sixth arm 16) at which the rotation axis A6 and the tip end surface of the sixth arm 16 intersect each other is referred to as axial coordinates 06 (predetermined part).

The hand 102 is attached to the tip end surface of the sixth arm 16 such that the center axis of the hand 102 matches the rotation axis A6 of the sixth arm 16, on the design. Here, the center of the tip end surface of the hand 102 is referred to as a tool center point (TCP). In the embodiment, the center is referred to as the center of a region between two fingers of the hand 102.

In addition, in each of the arms 11 to 16, the plurality of driving portions 130 including a motor, such as a servo motor, and a speed reducer, are respectively provided. In other words, as illustrated in Fig. 3, the robot 1 includes the driving portions 130 of which the number (six in the embodiment) corresponds to each of the arms 11 to 16. In addition, each of the arms 11 to 16 is respectively controlled by the control device 5 via the plurality (six in the embodiment) of motor drivers 120 which are electrically connected to the corresponding driving portion 130.

In addition, in each driving portion 130, for example, an angle sensor (not illustrated), such as an encoder or a rotary encoder, is provided. Accordingly, it is possible to detect the rotation angle of the rotation axis of the motor or the speed reducer of each driving portion 130.

In addition, as illustrated in Figs. 1 and 2, in the embodiment, as a robot coordinate system (coordinate system of the robot 1) which is used when controlling the robot 1, a three-dimensional orthogonal coordinate system which is orthogonal to an xr axis and a yr axis which are respectively parallel to the horizontal direction, and the horizontal direction, and which is determined by an zr axis that considers the vertically upward direction as the forward direction, is set. In addition, a translational component with respect to the xr axis is "component xr", a translational component with respect to the yr axis is "component yr", a translational component with respect to the zr axis is "component zr", a rotational component around the zr axis is "component ur", a rotational component with respect to the yr axis is "component vr", and a rotational component with respect to the xr axis is "component wr". The unit of the length (size) of the component xr, the component yr, and the component zr, is "mm", and the unit of the angle (size) of the component ur, the component vr, and the component wr is "°".

The robot 1 that is an example of a robot according to the invention is controlled by the control device 5 that is an example of a control device according to the invention which will be described later. Therefore, it is possible to provide the robot 1 that performs more accurate work.

Second Fixed Camera

The second fixed camera 2 illustrated in Figs. 1 and 2 has a function of capturing the target 60 or the like.

As illustrated in Fig. 2, the second fixed camera 2 includes an imaging element 21 which is configured of a charge coupled device (CCD) image sensor having a plurality of pixels; and a lens 22 (optical system). The second fixed camera 2 forms an image of light from the target 60 or the like on a light receiving surface 211 (sensor surface) of the imaging element 21 by the lens 22, converts the light into an electric signal, and outputs the electric signal to the control device 5. Here, the light receiving surface 211 is a front surface of the imaging element 21, and is a surface on which the light forms an image. In addition, in the embodiment, a position to which movement from the light receiving surface 211 is performed only by a focal length in the optical axis OA2 direction, is "imaging standard point 02 of the second fixed camera 2". In addition, the second fixed camera 2 has an auto focus function of automatically adjusting a pint, or a zoom function of adjusting magnification of imaging.

The second fixed camera 2 is fixed at the predetermined location in the work region 90 to be capable of capturing an upper part in the vertical direction. In addition, in the embodiment, the second fixed camera 2 is attached such that the optical axis OA2 (the optical axis of the lens 22) is substantially parallel to the vertical direction.

In this manner, in the embodiment, the second fixed camera 2 which is a second imaging portion is provided in the work region 90 which is at a place other than the robot 1 including the robot arm 10 that is the movable portion. Accordingly, for example, it is possible to allow the robot 1 to accurately perform the work with respect to target 60 based on the image captured by the second fixed camera 2. In addition, as the second fixed camera 2 is provided at a place other than the robot arm 10, for example, it is easy to confirm whether or not the hand 102 attached to the robot arm 10 accurately grips the target 60.

In addition, in the embodiment, as an image coordinate system (coordinate system of the image output from the second fixed camera 2) of the second fixed camera 2, a two-dimensional orthogonal coordinate system which is determined by an xa axis and a ya axis that are respectively parallel to the in-plane direction of the image, is set. In addition, a translational component with respect to the xa axis is "component xa", a translational component with respect to the ya axis is "component ya", and a rotational component around a normal line of an xa-ya plane is "component ua". The unit of a length (size) of the component xa and the component ya is "pixel", and the unit of an angle (size) of the component ua is "°".

In addition, the image coordinate system of the second fixed camera 2 is a two-dimensional orthogonal coordinate system which nonlinearly converts the three-dimensional orthogonal coordinates that are given to a camera viewing field of the second fixed camera 2 by adding optical properties (focal length, distortion, or the like) of the lens 22 and the number of pixels and the size of the imaging element 21.

Third Fixed Camera

The third fixed camera 9 illustrated in Figs. 1 and 2 has a configuration similar to the above-described second fixed camera 2 and has a function of capturing the target 60 or the like.

As illustrated in Fig. 2, the third fixed camera 9 includes an imaging element 91, and a lens 92 (optical system), similar to the second fixed camera 2. The third fixed camera 9 also forms an image on a light receiving surface 911 (sensor surface) of the imaging element 91, converts the light into an electric signal, and outputs the electric signal to the control device 5. The light receiving surface 911 is a front surface of the imaging element 91, and is a surface on which the light forms an image. In addition, in the embodiment, a position to which movement from the light receiving surface 911 is performed only by a focal length in the optical axis OA9 direction, is "imaging standard point 09 of the third fixed camera 9". In addition, the third fixed camera 9 has an auto focus function of automatically adjusting a pint, or a zoom function of adjusting magnification of imaging.

The third fixed camera 9 is provided on the inspection stand 62 to be capable of capturing an upper part in the vertical direction of an inspection surface 621 (work surface) which is an upper surface of the inspection stand 62. In addition, the inspection surface 621 of the inspection stand 62 can be in a state parallel to the horizontal direction, and additionally, can be in a state of being inclined with respect to the horizontal direction. In addition, in the embodiment, the third fixed camera 9 is attached such that the optical axis OA9 (optical axis of the lens 92) is substantially parallel to the vertical direction.

In addition, in the embodiment, as an image coordinate system (coordinate system of the image output from the third fixed camera 9) of the third fixed camera 9, a two-dimensional orthogonal coordinate system which is determined by an xc axis and a yc axis, is set.

A translational component with respect to the xc axis is "component xc", a translational component with respect to the yc axis is "component yc", and a rotational component around a normal line of an xc-yc plane is "component uc". The unit of a length (size) of the component xc and the component yc is "pixel", and the unit of an angle (size) of the component uc is "°".

Mobile Camera

The mobile camera 3 illustrated in Figs. 1 and 2 has a function of capturing the target 60 or the like.

As illustrated in Fig. 2, the mobile camera 3 includes an imaging element 31 which is configured of a charge coupled device (CCD) image sensor having a plurality of pixels; and a lens 32 (optical system). The mobile camera 3 forms an image of light from the target 60 or the like on a light receiving surface 311 (sensor surface) of the imaging element 31 by the lens 32, converts the light into an electric signal, and outputs the electric signal to the control device 5. Here, the light receiving surface 311 is a front surface of the imaging element 31, and is a surface on which the light forms an image. In addition, in the embodiment, a position to which movement from the light receiving surface 311 is performed only by a focal length in the optical axis OA3 direction, is "imaging standard point 03 of the mobile camera 3". In addition, the mobile camera 3 has an auto focus function of automatically adjusting a pint, or a zoom function of adjusting magnification of imaging.

The mobile camera 3 is attached to the sixth arm 16 so as to be also capable of capturing the tip end side of the robot arm 10 than the sixth arm 16. In addition, in the embodiment, on the design, the mobile camera 3 is attached to the sixth arm 16 such that the optical axis OA3 (optical axis of the lens 32) is substantially parallel to the rotation axis A6 of the sixth arm 16. In addition, since the mobile camera 3 is attached to the sixth arm 16, it is possible to change the posture thereof together with the sixth arm 16 by driving the robot arm 10.

In this manner, the mobile camera 3 which is a first imaging portion is provided in the sixth arm 16 included in the robot arm 10 which is a movable portion. Accordingly, for example, it is possible to allow the robot 1 to accurately perform the work with respect to the target 60 based on the image captured by the mobile camera 3.

In addition, in the embodiment, as the image coordinate system (coordinate system of the image output from the mobile camera 3) of the mobile camera 3, a two-dimensional orthogonal coordinate system which is determined by an xb axis and a yb axis that are respectively parallel to the in-plane direction of the image. In addition, a translational component with respect to the xb axis is "component xb", a translational component with respect to the yb axis is "component yb", and a rotational component around a normal line of an xb-yb plane is "component ub". The unit of a length (size) of the component xb and the component yb is "pixel", and the unit of an angle (size) of the component ub is "°".

In addition, the image coordinate system of the mobile camera 3 is a two-dimensional orthogonal coordinate system which nonlinearly converts the three-dimensional orthogonal coordinate that is given to a camera viewing field of the mobile camera 3 by adding optical properties (focal length, distortion, or the like) of the lens 32 and the number of pixels and the size of the imaging element 31.

Control Device

The control device 5 illustrated in Fig. 1 controls each portion of the robot 1, the second fixed camera 2, the third fixed camera 9, and the mobile camera 3. The control device 5 can be configured of a personal computer (PC) or the like in which a central processing unit (CPU), a read only memory (ROM), and a random access memory (RAM) are embedded.

As illustrated in Fig. 3, the control device 5 includes a control portion 51, a receiving portion 52 (information obtaining portion), and a storage portion 54.

The control portion 51 can control the driving of each of the driving portions 130, and can drive and stop each of the arms 11 to 16 independently. For example, in order to move the hand 102 to a target position, the control portion 51 derives a target value of the motor of each of the driving portions 130 provided in each of the arms 11 to 16. In addition, the control portion 51 feedback-controls the robot 1 based on the rotation angle (detection result) output from the angle sensor included in each of the driving portions 130. In addition, the control portion 51 controls the capturing or the like of the second fixed camera 2, the third fixed camera 9 and the mobile camera 3.

In addition, the control portion 51 has a function as a processing portion. In other words, the control portion 51 performs processing of various types of calculation or various types of determination based on the detection result obtained by the receiving portion 52. For example, the control portion 51 calculates the coordinates (components xa, ya, and ua: the position and the posture) of the imaging target in the image coordinate system of the second fixed camera 2 based on the image captured by the second fixed camera 2, calculates the coordinates (components xc, yc, and uc: the position and the posture) of the imaging target in the image coordinate system of the third fixed camera 9 based on the image captured by the third fixed camera 9, and calculates the coordinates (components xb, yb, and ub: the position and the posture) of the imaging target in the image coordinate system of the mobile camera 3 based on the image captured by the mobile camera 3. In addition, for example, the control portion 51 acquires the correction parameter for converting the coordinates of the target 60 in the image coordinate system of the second fixed camera 2 into the coordinates in the robot coordinate system, acquires the correction parameter for converting the coordinates of the target 60 in the image coordinate system of the third fixed camera 9 into the coordinates in the robot coordinate system, and acquires the correction parameter for converting the coordinates of the target 60 in the image coordinate system of the mobile camera 3 into the coordinates in the robot coordinate system.

The receiving portion 52 obtains the detection result output from each of the robot 1, the second fixed camera 2, the third fixed camera 9, and the mobile camera 3. Examples of the detection result include the rotation angle of the rotation axis of the motor or the speed reducer of each of the driving portions 130 of the robot 1, the image captured by each of the second fixed camera 2, the third fixed camera 9, and the mobile camera 3, and the coordinates (components xr, yr, zr, ur, vr, and wr: the position and the posture) of the axial coordinates 06 in the robot coordinate system.

The storage portion 54 stores a program or data for performing various types of processing by the control device 5, and the storage portion 54 stores various detection results.

In addition, as illustrated in Figs. 1 and 3, display equipment 41 and operation equipment 42 are connected to the control device 5.

The display equipment 41 includes a monitor which is configured of a display panel, such as a liquid crystal display panel including a screen 410. On the screen 410, for example, various windows are displayed, such as a window WD1 which is used when allowing the robot 1 to perform the work. The worker can confirm the image or the like captured by the second fixed camera 2, the third fixed camera 9, and the mobile camera 3, via the screen 410.

The operation equipment 42 is an input device which is configured of a mouse or a keyboard, and outputs a signal which is based on an instruction of the worker to the control device 5. Therefore, the worker can instruct various types of processing or the like to the control device 5 by operating the operation equipment 42. In addition, as the operation equipment 42, a touch panel or the like may be employed.

Above, a basic configuration of the robot system 100 is briefly described.

The robot system 100 which is an example of a robot system according to the invention includes the control device 5 which is an example of a control device according to the invention, and the robot 1 which is controlled by the control device 5. Therefore, the robot 1 can accurately perform various types of work by the control of the control device 5.

In addition, in the above-described robot system 100, for example, the robot 1 can perform the following work with respect to the target 60 by the control of the control device 5 based on a program stored in advance.

First, the target 60 mounted on a supply surface 611 which is an upper surface of the supply stand 61 is gripped by the hand 102 by driving the robot arm 10. After this, in a state where the target 60 is gripped by the hand 102, the hand 102 is moved onto the second fixed camera 2 by driving the robot arm 10. Next, the target 60 is captured by the second fixed camera 2, and based on the image captured by the second fixed camera 2, the control device 5 determines whether or not the target 60 is accurately gripped by the hand 102. When accurately gripping the target 60, the hand 102 is moved onto the inspection stand 62 by driving the robot arm 10. In addition, based on the image captured by the mobile camera 3, the target 60 gripped by the hand 102 is mounted onto the inspection stand 62. In mounting the target 60, the target 60 is captured by the third fixed camera 9, and based on the image captured by the third fixed camera 9, the control device 5 determines whether or not the target 60 can be accurately mounted on the inspection stand 62.

In the work with respect to the target 60, the control device 5 controls the operation of the robot 1 based on the instruction of the worker via the window WD1 displayed on the screen 410 illustrated in Fig. 4. The window WD1 is configured of a graphical worker interface (GUI).

As illustrated in Fig. 4, the window WD1 includes an item 451 which displays an image captured by the mobile camera 3 (first imaging portion), an item 452 which displays an image captured by the second fixed camera 2 (second imaging portion), and an item 453 which displays an image captured by the third fixed camera 9 (third imaging portion). Therefore, the worker can visually confirm each of the images captured by the second fixed camera 2, the third fixed camera 9, and the mobile camera 3 via the window WD1. In addition, the window WD1 includes an item 454 including a "Start" button, a "Stop" button, a "Pause" button, and a "Continue" button which are various command buttons used for instruction to the control portion 51 to allow the robot 1 to perform a desirable operation (start of work, or the like). In addition, the window WD1 includes an item 455 including an "Open Calib Wizard Window" button for displaying a window for calibration, and an item 456 including an "Open Check-Lighting Window" button for displaying a window for adjusting a quantity of light.

The worker performs various instructions with respect to the control portion 51 via the window WD1. For example, when the worker clicks (instructs) the "Start" button by the operation equipment 42, such as a mouse, the receiving portion 52 receives an input command based on the instruction. In addition, based on the input command received by the receiving portion 52, the control portion 51 allows the robot 1 to start the work with respect to the target 60.

As described above, in the embodiment, since the window WD1 having various buttons configured of the GUI is provided, the worker can simply instruct the work with respect to the target 60 of the robot 1, with respect to the control device 5 only by a relatively simple operation which is called clicking of a desirable button.

In addition, although not illustrated, the window WD1 may be provided with, for example, a combo box that can select a work program of the robot 1. Accordingly, it is possible to select a desirable work program from the drop-down list, and to perform the selected program.

In the work with respect to the target 60 of the robot 1, it is necessary to perform processing of acquiring a correction parameter for converting the coordinates (the position and the posture in the image coordinate system) on the image of the second fixed camera 2 into the coordinates in the robot coordinate system, that is, the calibration of the second fixed camera 2, such that the robot 1 accurately performs the work with respect to the target 60 based on the image captured by the second fixed camera 2. Regarding the third fixed camera 9 and the mobile camera 3, the calibration of the third fixed camera 9 and the calibration of the mobile camera 3 are similarly necessary.

Hereinafter, a calibration method of the second fixed camera 2, a calibration method of the third fixed camera 9, and a calibration method of the mobile camera 3 (hereinafter, the methods are collectively called "calibration method of the imaging portion") which use the robot system 100, will be described.

Calibration Method of Imaging Portion

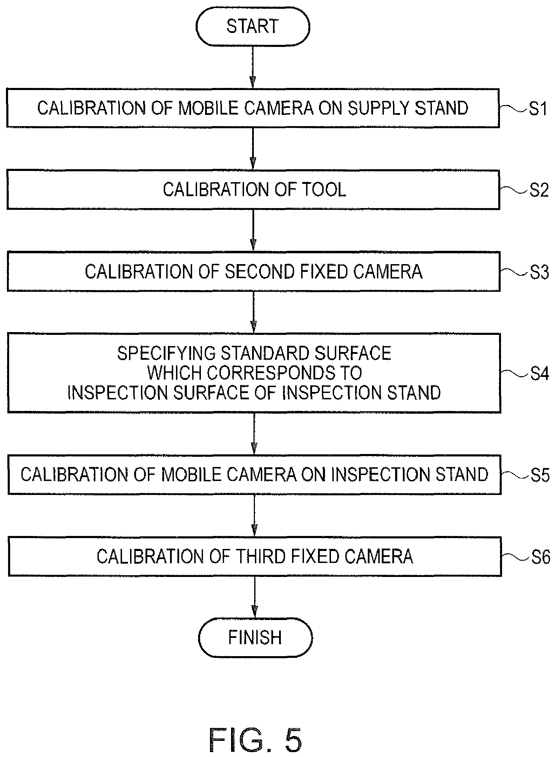

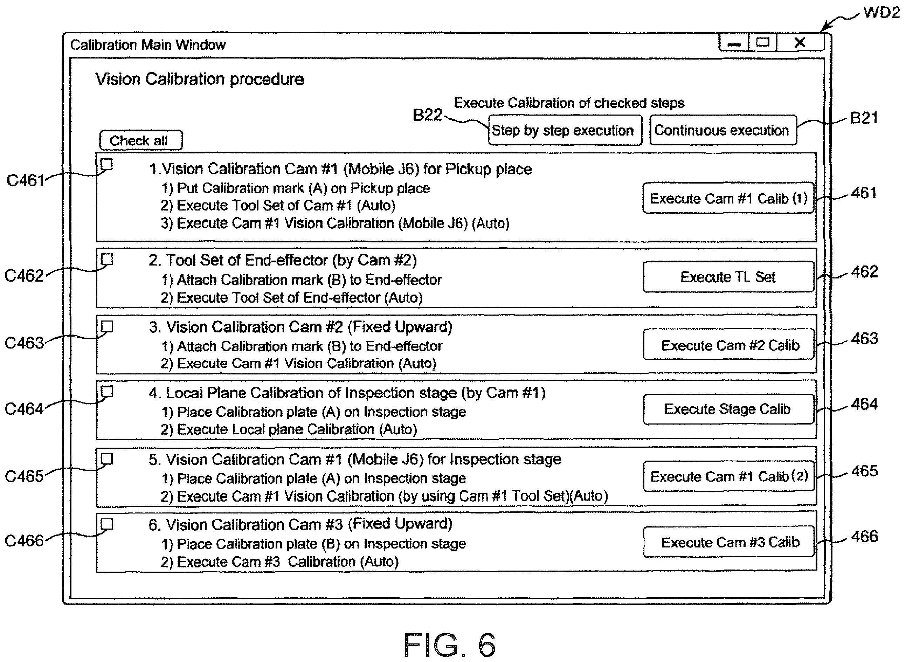

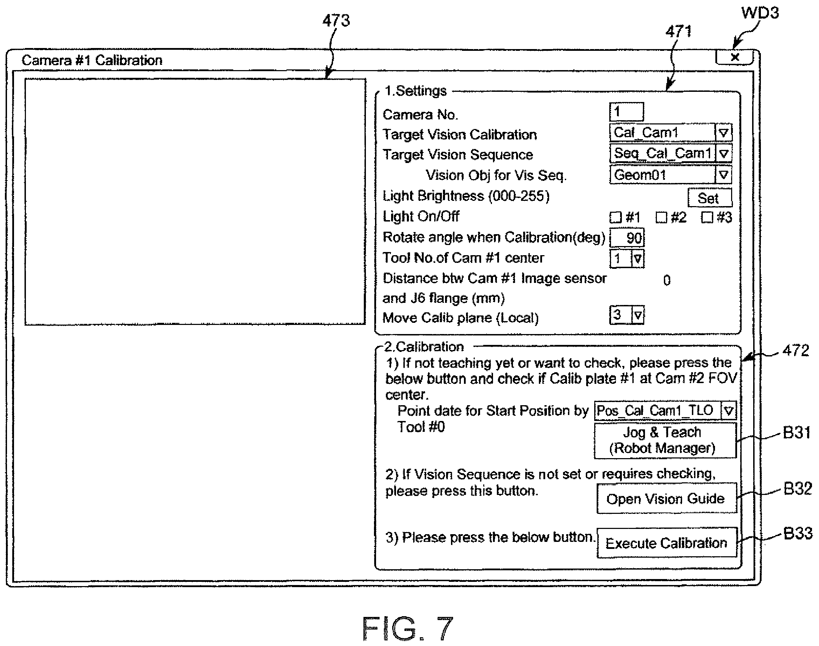

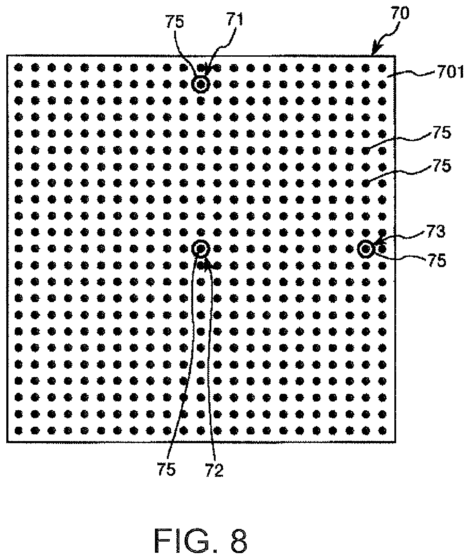

Fig. 5 is a flowchart illustrating the calibration method of the imaging portion which uses the robot system illustrated in Fig. 1. Fig. 6 is a view illustrating the window which is used during the calibration of the imaging portion. Fig. 7 is a view illustrating the window (setting screen) which is used during the calibration of the imaging portion. Fig. 8 is a plan view of a calibration member which is used in the calibration of the imaging portion.

As illustrated in Fig. 5, in the calibration of the imaging portion of the embodiment, the calibration of the mobile camera 3 on the supply stand 61 (step S1), the calibration of the hand 102 which is an end-effector (step S2), the calibration of the second fixed camera 2 (step S3), the specifying of the standard surface that corresponds to an inspection surface 621 of the inspection stand 62 (step S4), the calibration of the mobile camera 3 on the inspection stand 62 (step S5), and the calibration of the third fixed camera 9 (step S6), are performed in order. In addition, a part of the processing (calibration) can be omitted based on the instruction of the worker.

In addition, the calibration of the imaging portion illustrated in Fig. 5 is started based on the instruction of the worker via windows WD2 and WD3 which are displayed on the screen 410 (refer to Figs. 6 and 7). In addition, in the embodiment, the calibration of the imaging portion is performed by using the calibration member 70 (calibration board) illustrated in Fig. 8. Therefore, first, the windows WD2 and WD3 which are used for performing the instruction related to the calibration of the imaging portion, and the calibration member 70 which is used in the calibration of the imaging portion, will be described.

Window

The window WD2 illustrated in Fig. 6 is configured of the GUI (graphical worker interface).

As illustrated in Fig. 6, the window WD2 includes items 461 to 466 which correspond to each processing in the calibration method of the imaging portion illustrated in Fig. 5. The item 461 corresponds to the calibration of the mobile camera 3 on the supply stand 61 (step S1). The item 462 corresponds to the calibration of the hand 102 which is an end-effector (step S2). The item 463 corresponds to the calibration of the second fixed camera 2 (step S3). The item 464 corresponds to the specifying of the standard surface that corresponds to the inspection surface 621 of the inspection stand 62 (step S4). The item 465 corresponds to the calibration of the mobile camera 3 on the inspection stand 62 (step S5). The item 466 corresponds to the calibration of the third fixed camera 9 (step S6). In this manner, since the items 461 to 466 which are different from each other according to each processing are displayed, the worker easily grasps each processing.

The item 461 has an '"Execute Cam #1 Calib (1)" button which is a command button used for giving the instruction (command) to the control portion 51 to independently perform the calibration (step S1) of the mobile camera 3 on the supply stand 61. This is the same regarding each of the items 462 and 466. In other words, the item 462 has an "Execute TLset" button which is a performing button, the item 463 has an "Execute Cam #2 Calib" button which is a command button, the item 464 has an "Execute Stage Calib" button which is a command button, the item 465 has an "Execute Cam #1 Calib (2)" button which is a command button, and the item 466 has an "Execute Cam #3 Calib" button which is a command button.

When the worker clicks (instructs) the command button by the operation equipment 42, such as a mouse, the receiving portion 52 receives an input command that corresponds to the instruction. In addition, the control portion 51 displays the window WD3 (setting screen) for performing various settings of the calibration that corresponds to the items 461 to 466 having the clicked command buttons (refer to Fig. 7).

As illustrated in Fig. 7, the window WD3 includes an item 471 (Settings) which performs setting related to the imaging portion (the second fixed camera 2, the third fixed camera 9, or the mobile camera 3), an item 472 (Calibration) which performs setting related to the processing (calibration), and an item 473 which displays the image captured by the imaging portion (imaging information is output) .

Examples of the setting contents (work contents) included in the item 471 include the setting of ON/OFF of illumination included in the imaging portion and the quantity of light of the illumination. In addition, the setting contents (work contents) included in the item 471 are not limited to the illustrated contents, and are arbitrary. In addition, examples of the setting method include a method of selecting the desirable contents from the drop-down list, or a method of inputting numerical values or characters which correspond to the desirable contents into a text box. In addition, the setting contents which cannot be set are grayed out so as not to be selected, or may not be displayed.

The item 472 includes a "Jog & Teach (Robot Manager)" button B31, an "Open Vision Guide" button B32, and an "Execute Calibration" button B33. The "Jog & Teach (Robot Manager)" button B31 is used for displaying a window for operating the robot 1 in addition to the window WD3. The "Open Vision Guide" button B32 is used for displaying a window on which the setting or the like of the template for identifying an image of a predetermined marker in the imaging portion is performed, in addition to the window WD3. The "Execute Calibration" button B33 is a performing button that gives an instruction to perform the start of the calibration displayed on the window WD3 to the control portion 51. Therefore, when the worker clicks (instructs) the "Execute Calibration" button B33 by the operation equipment 42, such as a mouse, the receiving portion 52 receives the input command that corresponds to the instruction. In addition, based on the input command received by the receiving portion 52, the control portion 51 starts the processing that corresponds to the window WD3.

In addition, as illustrated in Fig. 6, the item 461 of the window WD2 has a check box C461, the item 462 has a check box C462, the item 463 has a check box C463, the item 464 has a check box C464, the item 465 has a check box C465, and the item 466 has a check box C466.

In addition, the window WD2 has a "Continuous execution" button B21 and a "Step by step execution" button B22. The "Continuous execution" button B21 and the "Step by step execution" button B22 are respectively performing buttons which are used for giving the instruction to the control portion 51 to collectively perform the processing that corresponds to the items 461 to 466 to which checks are attached to the check boxes C461 to 466. In addition, the processing which corresponds to the items 461 to 466 to which the checks are not attached is not performed, and the processing is skipped.

More specifically, the "Continuous execution" button B21 is used for continuously performing the processing that corresponds to the items 461 to 466 to which the checks are attached. Therefore, when the worker clicks (instructs) the "Continuous execution" button B21 by the operation equipment 42, such as a mouse, the receiving portion 52 receives the input command which corresponds to the instruction. In addition, based on the input command received by the receiving portion 52, the control portion 51 performs the processing that corresponds to the items 461 to 466 to which the checks are attached following the flow illustrated in Fig. 5. At this time, the display of the above-described window WD3 is not accompanied. Therefore, when the worker clicks (instructs) the "Continuous execution" button B21 by the operation equipment 42, such as a mouse, hereinafter, the calibration of the imaging portion is automatically performed by the robot system 100 (control device 5).

Meanwhile, the "Step by step execution" button B22 is used for gradually performing the processing that corresponds to the items 461 to 466 to which the check is attached. Therefore, when the worker clicks (instructs) the "Step by step execution" button B22 by the operation equipment 42, such as a mouse, the receiving portion 52 receives the input command that corresponds to the instruction. In addition, based on the input command received by the receiving portion 52, the control portion 51 performs the processing that corresponds to the items 461 to 466 to which the checks are attached following the flow illustrated in Fig. 5. At this time, the control portion 51 performs the display of the above-described window WD3 for each processing. For example, before performing the processing that corresponds to the item 461, the window WD3 which corresponds to the processing that corresponds to the item 461 is displayed. In addition, based on the input command via the "Execute Calibration" button B33 included in the window WD3, the control portion 51 starts the processing that corresponds to the item 461. After this, when the processing that corresponds to the item 461 is finished, the window WD3 which corresponds to the processing that corresponds to the item 462 is displayed before the control portion 51 performs the processing that corresponds to the item 462. A process after this is similar to the description above. Therefore, in a case where the setting of each processing is desired to be performed, or in a case where the confirmation or the change is desired to be performed, it is efficient to use the "Step by step execution" button B22 rather than the "Continuous execution" button B21.

As described above, the control device 5 which is an example of a control device according to the invention includes the control portion 51 which operates the robot 1 including the robot arm 10 that is the movable portion to which the hand 102 which is an end-effector that performs the work with respect to the target 60 is attached to be attachable and detachable; and the receiving portion 52 which receives the input command based on the instruction of the worker and outputs the signal based on the received input command to the control portion 51. In addition, the control portion 51 can collectively perform two or more of the processings among the calibration of the mobile camera 3 on the supply stand 61 (step S1), the calibration of the hand 102 which is an end-effector (step S2), the calibration of the second fixed camera 2 (step S3), the specifying of the standard surface that corresponds to the inspection surface 621 of the inspection stand 62 (step S4), the calibration of the mobile camera 3 on the inspection stand 62 (step S5), and the calibration of the third fixed camera 9 (step S6), based on the signal from the receiving portion 52. In other words, the control portion 51 can display the "Continuous execution" button B21 and the "Step by step execution" button B22 which are performing buttons (GUI button) on the screen 410 included in the display equipment 41, and the window WD2 including the check boxes C461 to 466. In addition, the control portion 51 can collectively perform the plural types of processing (calibration) based on the input command that corresponds to the instruction (click) of the worker with respect to the performing buttons. In this manner, since the control device 5 can collectively perform the plural types of selected calibration (work) by one input command with respect to the receiving portion 52, the setting of the calibration is easy, it is possible to perform the calibration during a short period of time, and efficiency is excellent. In addition, the operation performed by the worker is also easy.

In addition, the calibration method will be described in detail later, but in the calibration of the mobile camera 3 on the supply stand 61 (step S1) or in the calibration of the mobile camera 3 on the inspection stand 62 (step S5), first work of performing the calibration of the coordinate system of the mobile camera 3 which is the first imaging portion having the imaging function and the coordinate system of the robot 1, is performed. In addition, in the calibration of the second fixed camera 2 (step S3), second work of performing the calibration of the coordinate system of the second fixed camera 2 which is the second imaging portion having the imaging function and the coordinate system of the robot 1, is performed. In addition, in the specifying of the standard surface that corresponds to the inspection surface 621 of the inspection stand 62 (step S4), third work of calculating the posture of a virtual standard surface that corresponds to the work surface on which the robot 1 works, is performed. In addition, in the calibration of the mobile camera 3 on the supply stand 61 (step S1) or in the calibration of the mobile camera 3 on the inspection stand 62 (step S5), fourth work of calculating the distance between mobile camera 3 which is the first imaging portion and the axial coordinates 06 which is the standard point of the robot 1, is performed. In addition, in the calibration of the hand 102 which is the end-effector (step S2), fifth work of calculating the distance between the hand 102 which is the end-effector and the axial coordinates 06 which is the standard point, is performed.

In addition, the control portion 51 can collectively perform all of the processing of each of the steps S1 to S6 based on the signal from the receiving portion 52. In other words, the control portion 51 can collectively perform the above-described first work, the second work, the third work, the fourth work, and the fifth work. Accordingly, it is possible to improve the work efficiency of all of the first work to fifth work.

In addition, as described above, the control portion 51 can display the window WD2 having the check boxes C461 to 466 on the screen 410 included in the display equipment 41. In addition, the receiving portion 52 is configured to be capable of receiving an instruction that at least one of the processing steps S1 to S6 is not selectively performed. In other words, the receiving portion 52 is configured to be capable of receiving that at least one of the first work, the second work, the third work, the fourth work, and the fifth work is not selectively performed. Accordingly, it is possible to omit the performing of the desirable work among the first work to the fifth work, and to efficiently perform only the work desired to be performed.

In addition, the control portion 51 outputs a signal to display the setting screen for setting each of the setting contents (work contents) in each processing of the steps S1 to S6, based on the signal from the receiving portion 52. Accordingly, it is possible to display the window WD3 (setting screen) on the screen 410 of the display equipment 41. In other words, the control portion 51 can output the signal to display the window WD3 which is the setting screen for setting the work contents of each of the first work, the second work, the third work, the fourth work, and the fifth work. Therefore, the worker can simply set the work contents by operating the displayed window WD3.

Calibration Member

As described above, in the embodiment, the calibration of the imaging portion is performed by using the calibration member 70 (calibration board) illustrated in Fig. 8. In addition, as necessary, the calibration of the imaging portion may be performed by using another member or the like instead of the calibration member 70.

The calibration member 70 is a member having a shape of a quadrangle flat plate, and a plurality of markers 75 are attached to a front surface 701 of the calibration member 70. The plurality of markers 75 have the same circular shape and have substantially the same size. In addition, the plurality of markers 75 are disposed such that all of the pitches (intervals) between the adjacent markers 75 are substantially constant. In addition, the pitches between the markers 75 are measured in advance and is known.

Circles which surround the markers 75 are further respectively attached to the marker 75 which is positioned on an upper side in Fig. 8, the marker 75 which is positioned at the center part (center part of the front surface 701) in Fig. 8, and the marker 75 which is positioned on a right side in Fig. 8 among the plurality of markers 75. Among the three markers 75 and the markers which have a concentric circular shape configured of a circle which surrounds the three markers 75, the marker which is positioned on the upper side in Fig. 8 is "first marker 71 (first standard point)", the marker which is positioned at the center part in Fig. 8 is "second marker 72 (second standard point)", and the marker which is positioned on the right side in Fig. 8 is "third marker 73 (third standard point)". In addition, the positions of the first marker 71, the second marker 72, and the third marker 73 are different from each other, and the first marker 71, the second marker 72, and the third marker 73 are not on the same straight line.

In addition, the shapes of the plurality of markers 75, the first marker 71, the second marker 72, and the third marker 73 may respectively be any shape not being limited to the shape illustrated in the drawing. In addition, the marker 75, the first marker 71, the second marker 72, and the third marker 73 may be an aspect which can be visually recognized, may be in any color, and may be an aspect having unevenness, respectively. In addition, the aspects of the plurality of markers 75, the first marker 71, the second marker 72 and the third marker 73 may be different from each other. For example, the plurality of markers 75, the first marker 71, the second marker 72, and the third marker 73 may respectively be in any color or shape. However, since the first marker 71, the second marker 72, and the third marker 73 are used as the standard markers, it is preferable that the first marker 71, the second marker 72, and the third marker 73 are discerned from other markers 75.

Calibration of Imaging Portion

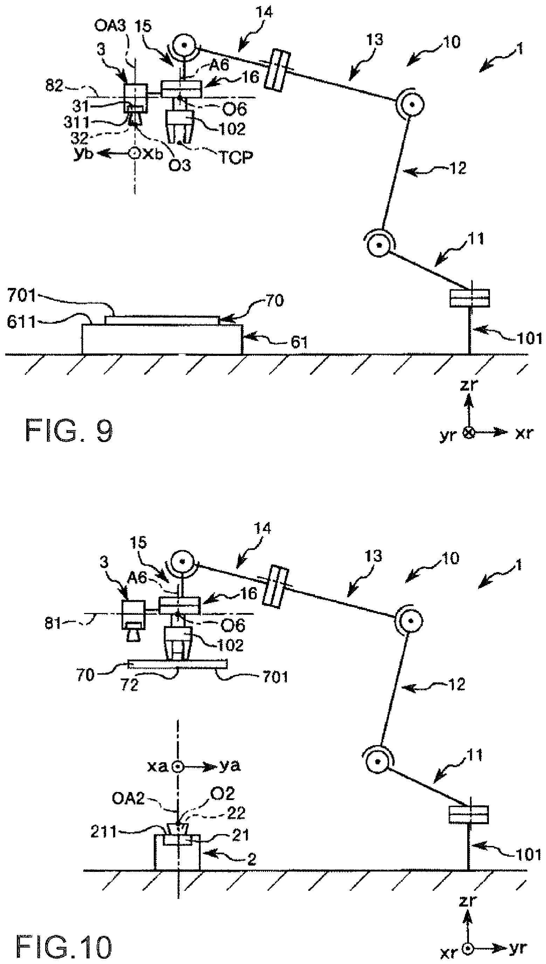

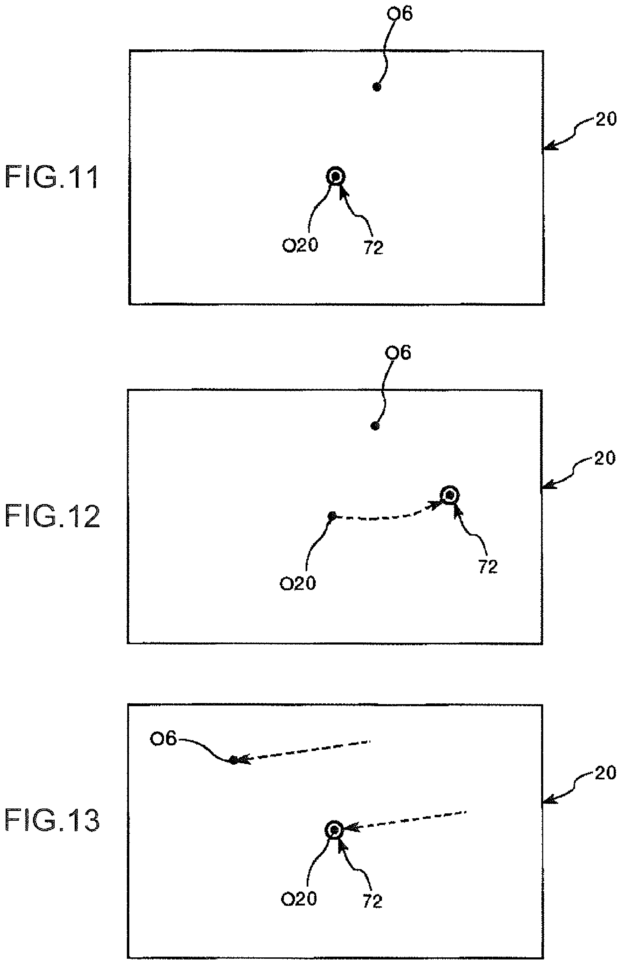

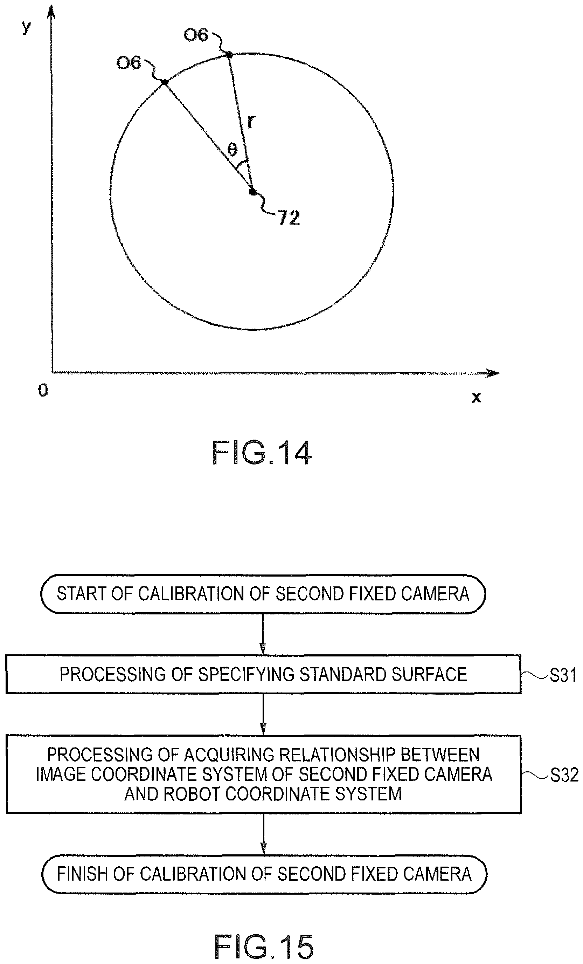

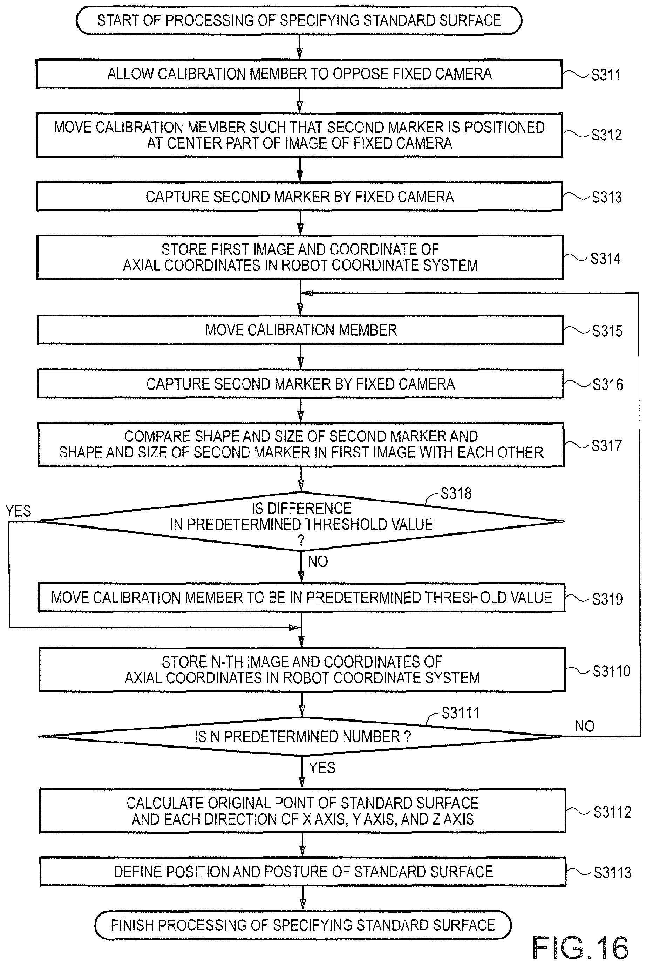

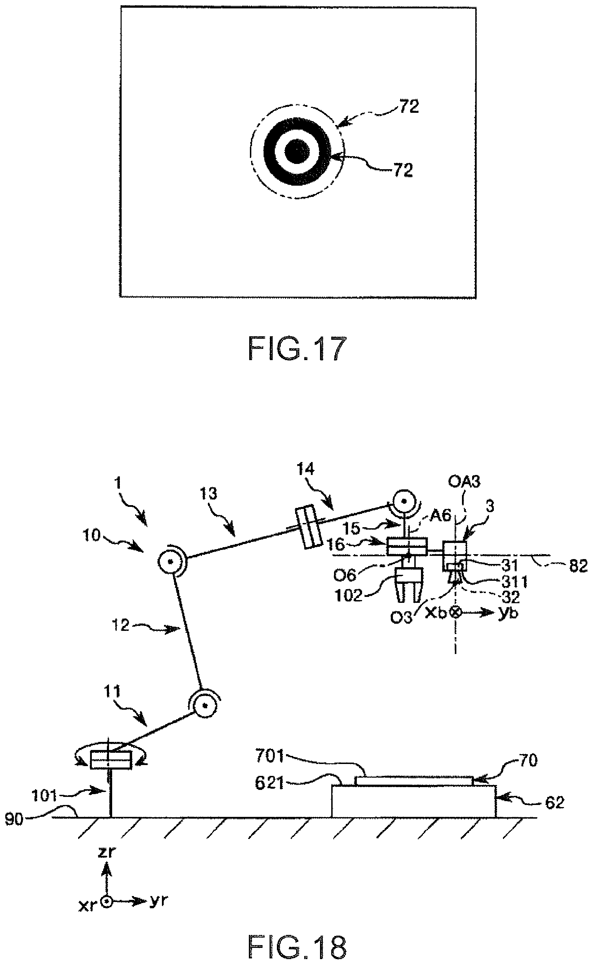

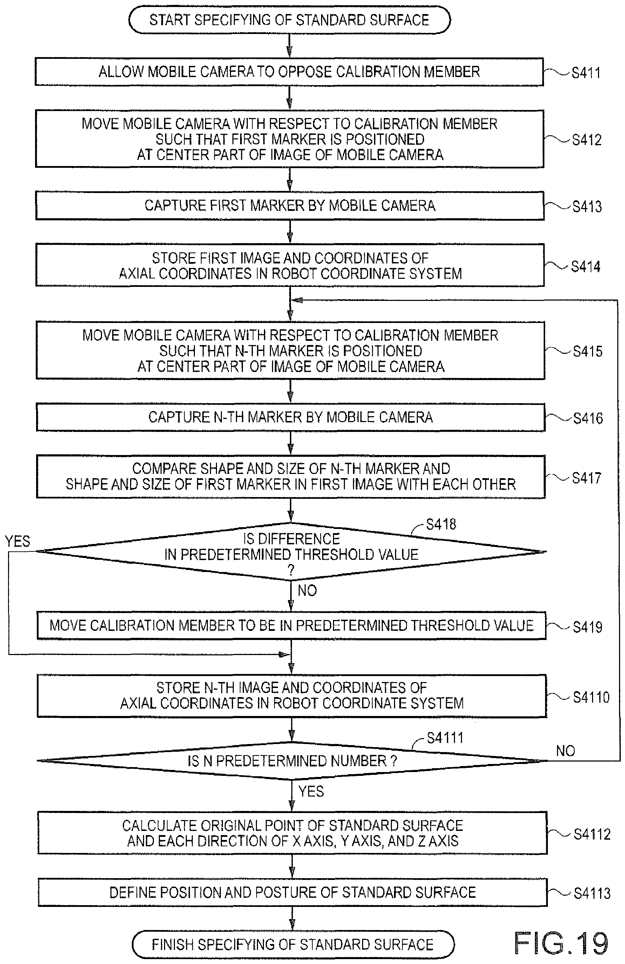

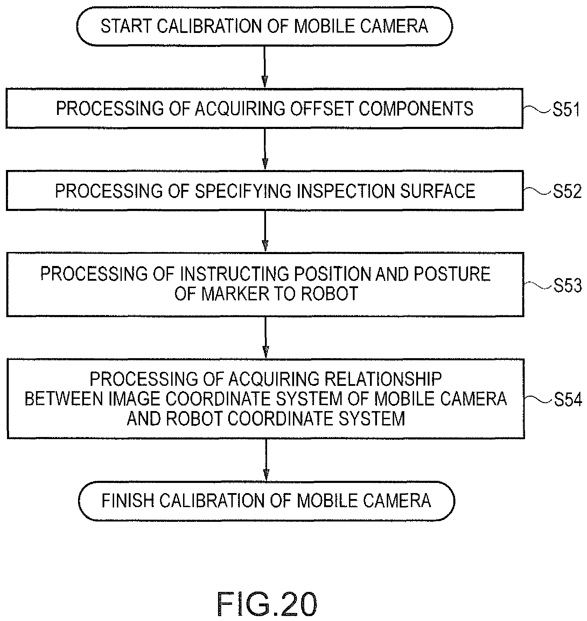

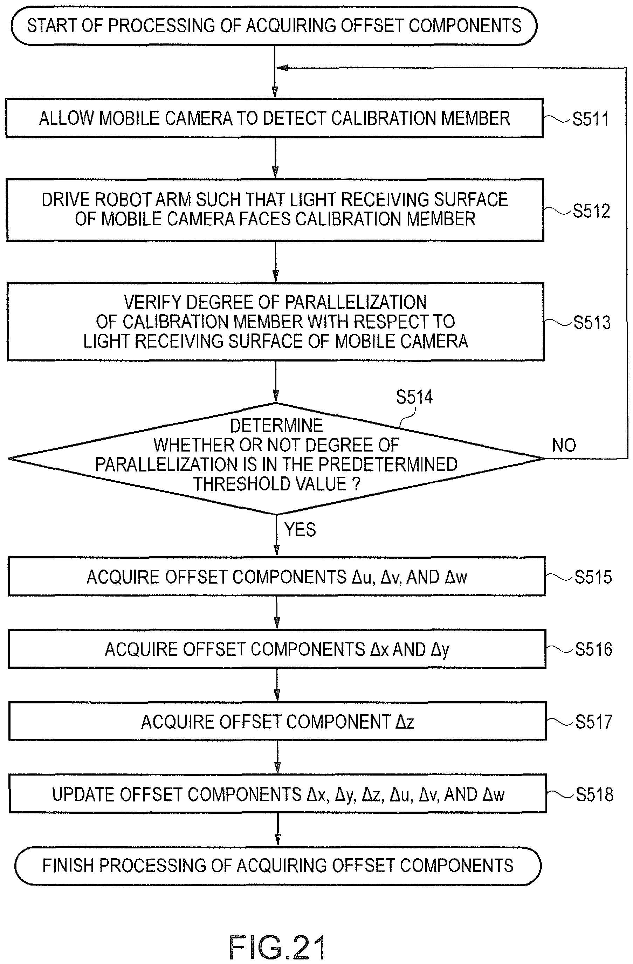

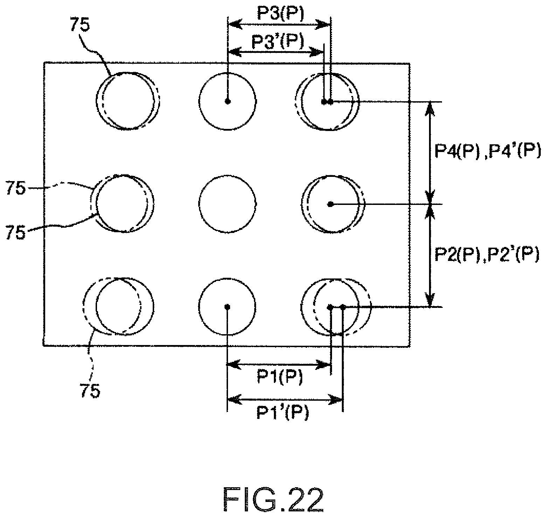

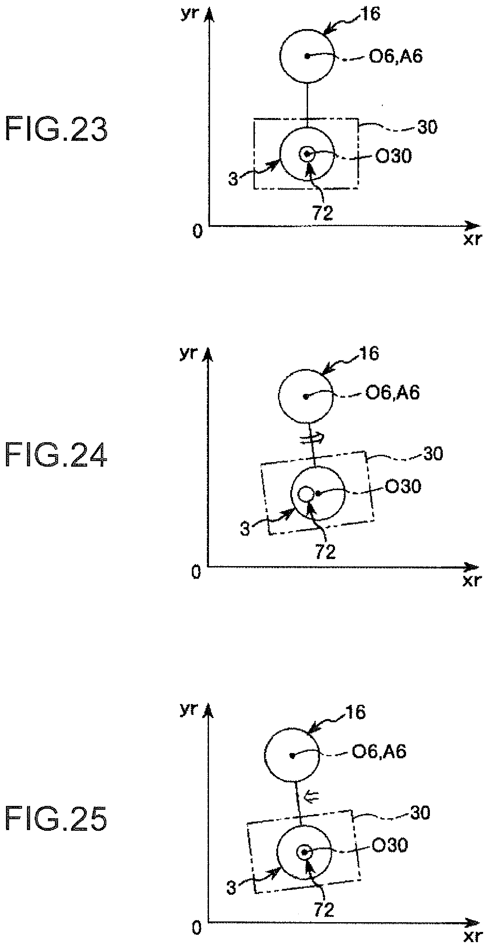

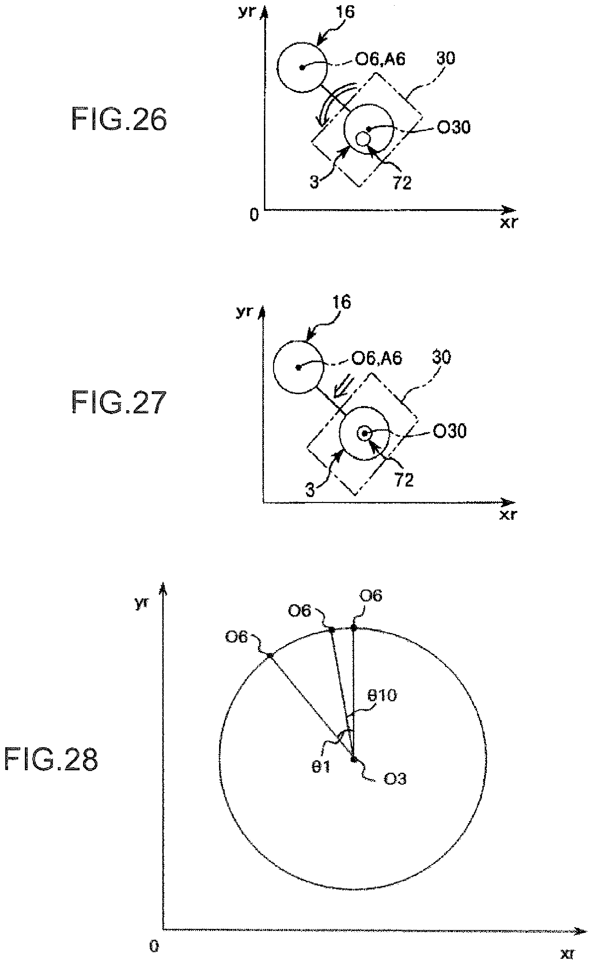

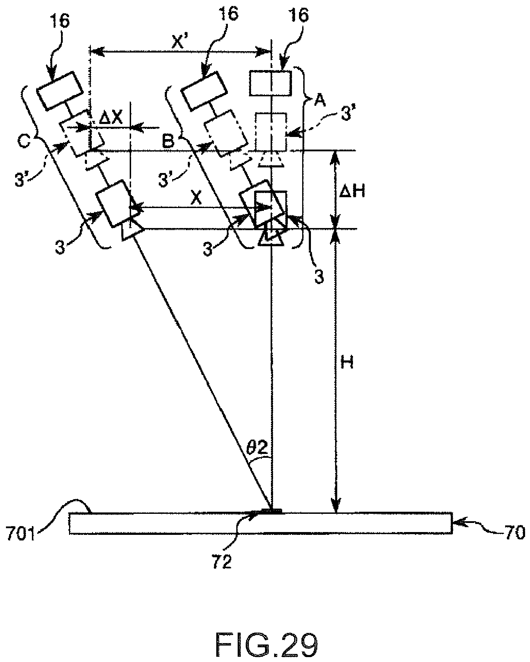

Fig. 9 is a schematic view of the robot for describing the calibration of the mobile camera on the supply stand illustrated in Fig. 5. Fig. 10 is a schematic view of the robot for describing the calibration of the end-effector illustrated in Fig. 5. Figs. 11 to 13 are respectively views for describing the calibration of the end-effector illustrated in Fig. 5. Fig. 14 is a coordinate view for describing the calibration of the end-effector illustrated in Fig. 5. Fig. 15 is a flowchart for describing the calibration of the second fixed camera illustrated in Fig. 5. Fig. 16 is a flowchart for describing the processing of specifying the standard surface illustrated in Fig. 15. Fig. 17 is a view for describing determination of whether or not the size of a first standard marker is in a threshold value in the processing of specifying the standard surface. Fig. 18 is a schematic view of the robot for describing the specifying of the standard surface that corresponds to the inspection surface of the inspection stand illustrated in Fig. 5. Fig. 19 is a flowchart for describing the specifying of the standard surface that corresponds to the inspection surface of the inspection stand illustrated in Fig. 5. Fig. 20 is a flowchart for describing the calibration of the mobile camera on the inspection stand illustrated in Fig. 5. Fig. 21 is a flowchart for describing processing of acquiring offset components illustrated in Fig. 20. Fig. 22 is a view for describing the processing of acquiring offset components $\Delta u$, $\Delta v$, and $\Delta w$ illustrated in Fig. 21. Figs. 23 to 27 are respectively views for describing processing of acquiring offset components $\Delta x$ and $\Delta y$ illustrated in Fig. 21. Fig. 28 is a coordinate view for describing the processing of acquiring the offset components $\Delta x$ and $\Delta y$ illustrated in Fig. 21. Fig. 29 is a view for describing processing of acquiring an offset component $\Delta z$ illustrated in Fig. 21.

As described above, in the calibration of the imaging portion of the embodiment, the calibration of the mobile camera 3 on the supply stand 61 (step S1), the calibration of the hand 102 which is the end-effector (step S2), the calibration of the second fixed camera 2 (step S3), the specifying of the standard surface that corresponds to the inspection surface 621 of the inspection stand 62 (step S4), the calibration of the mobile camera 3 on the inspection stand 62 (step S5), and the calibration of the third fixed camera 9 (step S6), are performed in order (refer to Fig. 5). In addition, hereinafter, it will be described that the control portion 51 can perform all of the processing following the flow illustrated in Fig. 5 based on the input command that corresponds to the "Continuous execution" button B21 of the window WD2.

In addition, in the embodiment, when performing the calibration of the imaging portion, robot calibration, that is, processing of acquiring the correspondence of the coordinate system of the hand 102 with respect to the coordinate system (base coordinate system) of the robot 1 may be performed in advance.

Calibration of Mobile Camera 3 on Supply Stand 61 (Step S1)

First, the control device 5 starts the calibration (step S1) of the mobile camera 3 on the supply stand 61. In addition, before starting the calibration (step S1), as illustrated in Fig. 9, the calibration member 70 may be mounted on the supply stand 61 in advance.

The calibration (step S1) is substantially similar to the calibration (step S5) of the mobile camera 3 on the inspection stand 62 which will be described later, except for that the calibration of the mobile camera 3 is performed on the supply stand 61 instead of the inspection stand 62. Therefore, specific description (processing contents and effects) thereof will be omitted, but in the calibration (step S1), the processing of acquiring the offset components which will be described later, the processing of specifying the inspection surface, the processing of instructing the position and the posture of the marker to the robot 1, and the processing of acquiring the relationship between the image coordinate system of the mobile camera 3 and the robot coordinate system, are performed (refer to Fig. 20). In addition, when the calibration (step S1) is finished, it is possible to convert the position and the posture (specifically, components xb, yb, and ub) of the target 60 or the like captured by the mobile camera 3 on the supply stand 61 into values (specifically, components xr, yr, and ur) in the robot coordinate system.

Calibration of Hand 102 which is End-effector (Step S2)

Next, as illustrated in Fig. 5, the control device 5 starts the calibration (step S2) of the hand 102, that is, the fifth work of calculating the distance between the hand 102 which is the end-effector and the axial coordinates 06 which is the standard point. In addition, before starting the calibration (step S2), as illustrated in Fig. 10, the calibration member 70 is gripped by the hand 102 in advance. In addition, the second marker 72 and the TCP are positioned on the same straight line.

Here, as described above, the hand 102 is attached to the sixth arm 16 such that the TCP is positioned on the rotation axis A6 of the sixth arm 16, on the design. However, practically, there is a case where the TCP is positioned being slightly shifted from the rotation axis A6 of the sixth arm 16 by an assembly error or the like of the hand 102 to the sixth arm 16. Here, toolset processing for deriving and setting the offset components (the position and the posture of the hand 102 with respect to the sixth arm 16) which are a shift of the rotation axis A6 of the TCP, is performed.

First, the control portion 51 moves the robot arm 10 such that the second marker 72 is positioned at a center 020 (centroid) of an image 20 of the second fixed camera 2, and moves the axial coordinates 06 of the sixth arm 16 such that the second marker 72 is positioned at the center 020 of the image 20 (refer to Fig. 11). After this, the control portion 51 obtains image data (1) by instructing the capturing to the second fixed camera 2. Next, the control portion 51 detects the position (more specifically, the position of the center of the second marker 72) of the second marker 72 from the obtained image data (1) by the coordinate system of the second fixed camera 2. Next, after translationally moving the sixth arm 16 in each of an xr-axis direction and a yr-axis direction only by a distance determined in advance, the control portion 51 instructs the capturing to the second fixed camera 2 and obtains image data (2). Next, the control portion 51 detects the position of the second marker 72 from the obtained image data (2) by the coordinate system of the second fixed camera 2. Next, the control portion 51 derives a coordinate conversion matrix which converts displacement of the target in the coordinate system (image coordinate system) of the second fixed camera 2 to displacement of the target in the robot coordinate system, based on the coordinates of the robot coordinate system of the axial coordinates 06 of the sixth arm 16 at the time when the image data (1) is captured, the coordinate of the coordinate system of the second fixed camera 2 of the second marker 72 detected from the image data (1), the coordinate of the robot coordinate system of the axial coordinates 06 at the time when the image data (2) is captured, and the coordinate of the coordinate system of the second fixed camera 2 of the second marker 72 detected from the image data (2). Next, the control portion 51 derives the displacement from the second marker 72 detected from the image data (2) to the center 020 of the image 20, converts the derived displacement into the displacement in the xr-axis direction and in the yr-axis direction of the robot coordinate system by using the coordinate conversion matrix, and accordingly, the control portion 51 derives a target value of the axial coordinates 06 for positioning the second marker 72 to the center 020 of the image 20 captured by the second fixed camera 2.

Next, the control portion 51 outputs the derived target value and moves the robot arm 10. As a result, the axial coordinates 06 translationally moves in each of the xr-axis direction and the yr-axis direction, a positional relationship of the second fixed camera 2, the axial coordinates 06, and the second marker 72 becomes a state A, and the second marker 72 is positioned at the center 020 of the image 20 captured by the second fixed camera 2 as illustrated in Fig. 11. Here, the center 020 of the image 20 captured by the second fixed camera 2 becomes the standard point correlating the image coordinate system with the robot coordinate system. In addition, in a state where the second marker 72 is positioned at the center 020 of the image 20, the second marker 72 becomes a point within the work space that corresponds to the standard point. In addition, in Fig. 11, the axial coordinates 06 is drawn in the image 20, but this is merely drawn for convenience, and the axial coordinates 06 is not practically photographed in the image 20. In addition, this is also similar in Figs. 12 and 13 which will be described later.

Next, the control portion 51 derives xr coordinates and yr coordinates of the second marker 72 in the robot coordinate system by using the coordinate conversion matrix. Here, since the second marker 72 is positioned at the center 020 of the image 20, when converting the coordinates of the center 020 of the image 20 in the robot coordinate system by using the coordinate conversion matrix, the xr coordinates and the yr coordinates of the second marker 72 in the robot coordinate system are derived.

Next, the control portion 51 rotates the sixth arm 16 only by an angle (for example, 30 degrees) determined in advance in a state where the rotation axis of the sixth arm 16 is maintained to be parallel to the zr axis. In a case where the hand 102 is rotated around the axial coordinates 06, there is a possibility that the second marker 72 moves to the outside of the image 20 from the center 020 of the image 20. Therefore, the angle by which the sixth arm 16 rotates is determined in advance in a range that the second marker 72 is positioned within the image 20 after the rotation. When rotating the sixth arm 16 in this manner, a state C where the second marker 72 rotates is achieved as the hand 102 rotates around the rotation axis parallel to the zr axis through the axial coordinates 06 (refer to Fig. 12).

Next, the control portion 51 instructs the capturing to the second fixed camera 2, rotates the hand 102 around the axial coordinates 06, and as illustrated in Fig. 12, obtains image data (3) in the state C where the second marker 72 rotates around the axial coordinates 06. In the image data (3), the second marker 72 is separated from the center 020 of the image 20 as illustrated in Fig. 12.

Next, the control portion 51 drives the robot arm 10 such that the second marker 72 moves again to the center 020 of the image 20 captured by the second fixed camera 2 (refer to Fig. 13). Accordingly, the axial coordinates 06 rotates only by an angle determined in advance around the second marker 72 from the state A illustrated in Fig. 11, and the positional relationship between the axial coordinates 06 and the second marker 72 transitions from the state A illustrated in Fig. 11 to a state B illustrated in Fig. 13 through the state C illustrated in Fig. 12. In the state B, as illustrated in Fig. 13, the second marker 72 is positioned at the center O20 of the image 20 captured by the second fixed camera 2. In other words, in the process of transition from the state A to the state B, in the coordinate system (image coordinate system) of the second fixed camera 2, as illustrated in Figs. 11 to 13, the axial coordinates 06 similarly rotates around the center 020 of the image 20. Therefore, as illustrated in Fig. 14, the movement from the state A to the state B through the state C is the same as the movement of the axial coordinates 06 by a rotation angle $\theta$ around a line segment which passes through the axial coordinates 06 as a rotation center axis. In other words, the axial coordinates 06 traces a circular arc around the second marker 72. A radius r of the arc is equivalent to the distance from the axial coordinates 06 to the second marker 72, and the rotation angle $\theta$ which is the center angle of the arc is equivalent to the angle by which the axial coordinates 06 is rotated from the state A to the state B. Therefore, regarding the state A and the state B, the control portion 51 solves a simultaneous equation by expressing the xa and ya coordinates of the axial coordinates 06, the xa and ya coordinates of the second marker 72, the rotation angle $\theta$ (center angle) of the arc, and the radius r of the arc, and derives the xr coordinates and the yr coordinates of the second marker 72 in the robot coordinate system. The xa coordinates and the ya coordinates of the axial coordinates 06 in the state A and in the state B are known, and the correspondence between the robot coordinate system and the coordinate system (coordinate system fixed to the TCP) fixed to the sixth arm 16 is also known. Here, the control portion 51 can derive and set the offset components of the hand 102 with respect to the axial coordinates 06 in the direction of two axes perpendicular to the rotation axis A6 of the sixth arm 16, based on the xa coordinates and the ya coordinates of the axial coordinates 06 in any one of the state A and the state B, and the xa coordinates and the ya coordinates of the second marker 72.

As described above, in the calibration (step S2) of the hand 102, only by moving the axial coordinates 06, for example, by a jog-feeding operation to a position at which the second marker 72 can be captured by the second fixed camera 2, it is possible to automatically derive and set the offset of the TCP with respect to the axial coordinates 06. Therefore, the setting of the offset of the robot 1 can be easily performed during a short period of time. In addition, even in a state where the coordinate system of the second fixed camera 2 and the coordinate system of the robot 1 are not calibrated, it is possible to automatically set the offset of the hand 102 with respect to the axial coordinates 06 of the robot arm 10.

Here, as described above, the hand 102 which is the end-effector is attached to the robot arm 10 which is the movable portion to be rotatable, and the axial coordinates 06 which is the standard point is positioned on the rotation axis A6 of the sixth arm 16 which is the member included in the robot arm 10.

Therefore, by performing the processing of acquiring the offset components (fifth work) described above, the distance between the hand 102 and the axial coordinates 06 is acquired, and thus, the robot 1 can perform the work with respect to the target 60 with higher accuracy.

Calibration of Second Fixed Camera (Step S3)

Next, as illustrated in Fig. 5, the control device 5 starts the calibration of the second fixed camera 2 (step S3).

As illustrated in Fig. 15, in the calibration of the second fixed camera 2 (step S3), after performing the processing of specifying the standard surface (step S31), the processing of acquiring the relationship between the image coordinate system of the second fixed camera 2 and the robot coordinate system (step S32) is performed.

Processing of Specifying Standard Surface (Step S31)

Hereinafter, the processing (step S31) of specifying the standard surface will be described with reference to the flowchart illustrated in Fig. 16.

As illustrated in Fig. 16, first, the control device 5 drives the robot arm 10, and as illustrated in Fig. 10, the control device 5 allows the calibration member 70 gripped by the hand 102 to oppose the second fixed camera 2 (step S311).

Next, as illustrated in Fig. 16, the control device 5 drives the robot arm 10, and moves the calibration member 70 such that the second marker 72 attached to the calibration member 70 is positioned at the center part of the image of the second fixed camera 2 (step S312).

Next, the control device 5 captures the second marker 72 by the second fixed camera 2 (step S313). At this time, the control device 5 performs the processing (focusing processing) of moving the calibration member 70 by driving the robot arm 10 such that a focal point of the second fixed camera 2 is adjusted (focused) to second marker 72. The processing may be performed by using the auto focus function of the second fixed camera 2. In addition, the focusing processing may be omitted.

Next, the control device 5 stores the image of the second marker 72 captured by the second fixed camera 2 in the storage portion 54 as "first image", and the coordinates of the axial coordinates 06 in the robot coordinate system when the first image is captured is stored in the storage portion 54 (step S314). Here, in the processing of specifying the standard surface in the second fixed camera 2 (step S31), the second marker 72 when the first image is captured is "first standard marker".

Next, the control device 5 drives the robot arm 10, and translationally moves the calibration member 70 along the xr axis, the yr axis, and the zr axis in the robot coordinate system such that the second marker 72 is positioned at a position different from the position to which the second marker 72 is moved in step S312 on the image of the second fixed camera 2 (step S315).

Next, the control device 5 captures the second marker 72 by the second fixed camera 2 (step S316).

Next, the shape and the size of the second marker 72 in the image captured by the second fixed camera 2 in step S316, and the shape and the size of the second marker 72 in the first image stored in the storage portion 54 in step S314, are compared with each other (step S317). In addition, it is determined whether or not a difference between the shape and the size of the second marker 72, and the shape and the size of the second marker 72 in the first image, is in a predetermined threshold value (step S318).

In a case where it is determined that the difference is in the predetermined threshold value ("YES" in step S318), the process moves to step S3110. Meanwhile, in a case where it is determined that the difference is not in the predetermined threshold value ("NO" in step S318), the calibration member 70 is moved by the driving of the robot arm 10 so that the difference is to be in the predetermined threshold value (step S319). For example, the size (outer shape) of the second marker 72 illustrated by a two-dot chain line in Fig. 17 is different from the size (outer shape) of the second marker 72 in the first image illustrated by a solid line in Fig. 17, and in a case where the difference in size is not in the predetermined threshold value, the calibration member 70 is moved by the driving of the robot arm 10 such that the difference is in the predetermined threshold value.

Next, when it is determined that the difference is in the predetermined threshold value, the control device 5 stores the image of the second marker 72 captured by the second fixed camera 2 in the storage portion 54 as "second image (n-the image)", and stores the coordinate of the axial coordinates 06 in the robot coordinate system when the second image (n-th image) is captured in the storage portion 54 (step S3110). Here, in the processing of specifying the standard surface in the second fixed camera 2 (step S31), the second marker 72 when the second image is captured is "second standard marker". In addition, when capturing the second image, the second marker 72 attached to the calibration member 70 gripped by the hand 102 is at a position different from the position when capturing the first image.

Next, it is determined whether or not the number n of the captured images is a predetermined number set in advance (here, n is an integral number, and is the number which satisfies the relationship of $3 \leq n$) (step S3111). In a case where it is determined that the number is the predetermined number, the process moves to step S3112, and in a case where it is determined that the number is less than the predetermined number, the above-described step S315 to step S3110 are repeated until it is determined that the number is the predetermined number.

Here, in the embodiment, it is set in advance that the image is obtained until the number of the images becomes 3, that is, it is set to capture three images (first image, second image, and third image) by the second fixed camera 2 in advance. Therefore, in the embodiment, after capturing the second image by the second fixed camera 2, step S315 to step S3110 are performed one more time, the calibration member 70 is moved by the driving of the robot arm 10, the image of the second marker 72 captured by the second fixed camera 2 is stored in the storage portion 54 as "third image" , and the coordinates of the axial coordinates 06 in the robot coordinate system when the third image is captured are stored in the storage portion 54. Here, in the processing of specifying the standard surface in the second fixed camera 2 (step S31), the second marker 72 when the third image is captured is "third standard marker" . In addition, when capturing the third image, the second marker 72 attached to the calibration member 70 gripped by the hand 102 is at a position different from the position when capturing the first image and the position when capturing the second image, and is not on the same straight line. In addition, in the processing of specifying the standard surface in the second fixed camera 2 (step S31), it can be ascertained that the second marker 72 serves as "the first standard marker, the second standard marker, and the third standard marker".

Next, when it is determined that the number n of images is the predetermined number, based on the coordinates of the axial coordinates 06 in n (three in the embodiment) robot coordinate systems stored in the storage portion 54, the control portion 51 acquires an origin point of a standard surface 81 parallel to the imaging element 21 (a plane which passes through the second markers 72 which are in a state of being disposed at three different locations) illustrated in Fig. 10, and each direction of the x axis, the y axis, and the z axis (step S3112). In addition, the control device 5 defines the position and the posture of the standard surface 81 in the robot coordinate system, that is, the components xr, yr, zr, ur, vr, and wr of the standard surface 81 (step S3113).

Above, the processing of specifying the standard surface (step S31) illustrated in Fig. 15 is finished.

As described above, according to the control device 5, it is possible to acquire the posture of the standard surface 81 based on the images (the first image, the second image, and the third image) captured by the second fixed camera 2 (imaging portion). Therefore, similar to the related art, it is possible to omit the work of determining a contact state between a touch-up hand and a calibration tool (calibration member) by the worker. Therefore, it is possible to reduce variation caused by a human error or variation caused by the worker, and accordingly, it is possible to acquire the posture of the standard surface 81 with high accuracy. In addition, when the standard surface is acquired by bringing the touch-up hand into contact with the calibration tool similar to the related art, the posture of the acquired standard surface varies according to the material or the like of the calibration tool, and it is difficult to detect the posture of the standard surface with high accuracy. Meanwhile, in the embodiment, since the posture of the standard surface 81 is acquired based on the image captured by the second fixed camera 2, it is possible to acquire the posture of the standard surface 81 without coming into contact with the calibration member 70 (in a non-contact state). Therefore, for example, it is possible to acquire the posture of the standard surface 81 with high accuracy regardless of the material or the like of the calibration member 70.

In addition, according to the control device 5, since it is possible to acquire the posture of the standard surface 81 based on the image captured by the second fixed camera 2, it is possible to more easily and rapidly acquire the posture of the standard surface 81 than the related art.

In addition, as described above, in the embodiment, the standard surface 81 is acquired based on the coordinates of the axial coordinates 06 (predetermined part) in the robot coordinate system when each of the three images (the first image, the second image, and the third image) is respectively captured. Therefore, it can be said that the standard surface 81 is a surface including the axial coordinates 06. Therefore, as the robot 1 performs the work (for example, the work of determining whether or not the target 60 is accurately gripped by the hand 102) on the standard surface 81, the robot 1 can accurately perform the work.

In particular, as described above, in the embodiment, when capturing the three images, by performing the focusing processing, when the robot 1 performs each work of detecting, inspecting, and assembling the target 60 on the standard surface 81, the robot 1 can perform various types of work with higher accuracy.

In addition, in the above-described calibration (step S2) of the hand 102 which is the end-effector, the distance between the axial coordinates 06 and the tool center point TCP is known. Therefore, it is possible to acquire the surface including the tool center point TCP based on the distance and the standard surface 81 which is the surface including the axial coordinates 06.

In addition, in the embodiment, the processing of specifying the standard surface 81 based on the coordinates of the axial coordinates 06 (step S31) is performed, but the standard surface 81 may be specified based on the coordinates of the tool center point TCP, and the standard surface 81 may be specified based on another arbitrary part of the robot.

In addition, as described above, in the embodiment, based on the size of the second marker 72 in the first image, the size of the second marker 72 in the second image, and the size of the second marker 72 in the third image, the position and the posture of the standard surface 81 are acquired. Therefore, in the embodiment, when the position and the posture of the standard surface 81 are acquired based on the size of the second marker 72 in each image, it is possible to accurately acquire the posture of the standard surface 81.

In addition, the acquiring of the position and the posture of the standard surface 81 based on the size of the second marker 72 in each image, is the same as the acquiring of the posture of the standard surface 81, based on a distance (first distance) between the second marker 72 when the first image is obtained and the light receiving surface 211 (more specifically, imaging standard point 02) of the second fixed camera 2, a distance (second distance) between the second marker 72 when the second image is obtained and the light receiving surface 211 (imaging standard point O2), and a distance (third distance) between the second marker 72 when the third image is obtained and the light receiving surface 211 (imaging standard point O2). Therefore, according to the calibration method of the embodiment, it is possible to acquire the posture of the standard surface 81 based on the distance, such as the first distance, the second distance, and the third distance.

Processing of Acquiring Relationship between Image Coordinate System of Second Fixed Camera and Robot Coordinate System (Step S32)

Next, as illustrated in Fig. 15, the second work of performing the processing of acquiring the relationship between the image coordinate system of the second fixed camera 2 and the robot coordinate system (step S32), that is, the calibration of the coordinate system of the second fixed camera 2 which is the second imaging portion and the coordinate system of the robot 1, is performed.

First, the control device 5 drives the robot arm 10, and moves the calibration member 70 such that each of the axial coordinates 06 is positioned at nine arbitrary standard points (virtual target points) which are arranged in a shape of lattice in the standard surface 81 acquired in the above-described step S31. In other words, the second marker 72 is moved to nine locations arranged in a shape of lattice. At this time, the control device 5 captures the second marker 72 by the second fixed camera 2 each time when the calibration member 70 is moved.

Here, all of the nine standard points are within a range (within an imaging region) of the image of the second fixed camera 2, and all of the intervals between the standard points adjacent to each other are equivalent to each other.

Next, based on the coordinates (components xa, ya, and ua) of the second marker 72 in the image coordinate system of the second fixed camera 2 based on the nine images, and the coordinates (components xr, yr, and ur) of the standard surface 81 in the robot coordinate system acquired in the above-described step S31, the control device 5 acquires the correction parameter (coordinate conversion matrix) which converts the image coordinate of the second fixed camera 2 into the coordinate of the standard surface 81 in the robot coordinate system.

When the correction parameter acquired in this manner is used, it is possible to convert the position and the posture (specifically, components xa, ya, and ua) of the target 60 or the like captured by the second fixed camera 2 into the values (specifically, components xr, yr, and ur) in the robot coordinate system. In addition, the correction parameter is a value to which an inner parameter of the second fixed camera 2, such as distortion of the lens 22, is added.

In addition, in the embodiment, as described above, the correction parameter is acquired by using the nine standard points, but the accuracy of the calibration increases as the number of standard points used for acquiring the correction parameter increases.

Above, the calibration of the fixed camera illustrated in Fig. 5 (step S3) is finished.

Specifying of Standard Surface which Corresponds to Inspection Surface 621 of Inspection Stand 62 (Step S4)

Next, the control device 5 starts the specifying of the standard surface (virtual standard surface) which corresponds to the inspection surface 621 of the inspection stand 62 illustrated in Fig. 5 (step S4), that is, the third work of calculating the posture of the virtual standard surface which corresponds to the work surface on which the robot 1 works.

In addition, as illustrated in Fig. 18, the calibration member 70 gripped by the hand 102 is mounted on the inspection surface 621 of the inspection stand 62 in advance, and after this, the specifying of the standard surface which corresponds to the inspection surface 621 of the inspection stand 62 (step S4) is started.

Hereinafter, the specifying of the standard surface which corresponds to the inspection surface 621 of the inspection stand 62 (step S4) will be described in detail with reference to the flowchart illustrated in Fig. 19.

First, the control device 5 drives the robot arm 10, and as illustrated in Fig. 18, the control device 5 allows the mobile camera 3 to oppose the calibration member 70 (step S411).

Next, the control device 5 drives the robot arm 10, and moves the mobile camera 3 such that the first marker 71 attached to the calibration member 70 is positioned at the center part of the image of the mobile camera 3 (step S412).

Next, the control device 5 captures the first marker 71 by the mobile camera 3 (step S413). At this time, the control device 5 performs the processing (focusing processing) of moving the mobile camera 3 by driving the robot arm 10 such that the focal point of the mobile camera 3 is adjusted (focused) to the first marker 71. The processing may be performed by using the auto focus function of the mobile camera 3. In addition, the focusing processing may be omitted.

Next, the control device 5 stores the image of the first marker 71 captured by the mobile camera 3 in the storage portion 54 as "first image", and stores the coordinates of the axial coordinates 06 in the robot coordinate system when the first image is captured in the storage portion 54 (step S414). Here, in specifying the standard surface which corresponds to the inspection surface 621 of the inspection stand 62 (step S4), the first marker 71 is "first standard marker".

Next, the control device 5 drives the robot arm 10, and translationally moves the mobile camera 3 such that the second marker 72 is positioned at the center part of the image of the mobile camera 3 (step S415).

Next, the control device 5 captures the second marker 72 (n-th marker) by the mobile camera 3 (step S416).

Next, the shape and the size of the second marker 72 in the image captured by the mobile camera 3 in step S416, and the shape and the size of the first marker 71 in the first image stored in the storage portion 54 in step S414, are compared with each other (step S417). In addition, it is determined whether or not a difference between the shape and the size of the second marker 72 and the shape and the size of the first marker 71 is in a predetermined threshold value (step S418).

In a case where it is determined that the difference is in the predetermined threshold value ("YES" in step S418), the process moves to step S4110. Meanwhile, in a case where it is determined that the difference is not in the predetermined threshold value ("NO" in step S418), the mobile camera 3 is moved by the driving of the robot arm 10 so that the difference is to be in the predetermined threshold value (step S419).

Next, when it is determined that the difference is in the predetermined threshold value, the control device 5 stores the image of the second marker 72 (n-th marker) captured by the mobile camera 3 in the storage portion 54 as "second image (n-th image)", and stores the coordinates of the axial coordinates 06 in the robot coordinate system when the second image (n-th image) is captured in the storage portion 54 (step S4110). Here, in specifying the standard surface which corresponds to the inspection surface 621 of the inspection stand 62 (step S4), the second marker 72 is "second standard marker".

Next, it is determined whether or not the number n of the captured images is a predetermined number set in advance (here, n is an integral number, and is the number which satisfies the relationship of $3 \leq n$) (step S4111). In a case where it is determined that the number is the predetermined number, the process moves to step S4112, and in a case where it is determined that the number is less than the predetermined number, the above-described step S415 to step S4110 are repeated until it is determined that the number is the predetermined number.

Here, in the embodiment, it is set to capture three images (the first image, the second image, and the third image) by the mobile camera 3 in advance. Therefore, in the embodiment, after capturing the second image by the mobile camera 3, step S415 to step S4110 are performed one more time, the image of the third marker 73 captured by the mobile camera 3 is stored in the storage portion 54 as "third image", and the coordinates of the axial coordinates 06 in the robot coordinate system when the third image is captured is stored in the storage portion 54. Here, in specifying the standard surface which corresponds to the inspection surface 621 of the inspection stand 62 (step S4), the third marker 73 is "third standard marker".

Next, when it is determined that the number n of images is the predetermined number, based on the coordinate of the axial coordinates 06 in n (three in the embodiment) robot coordinate systems stored in the storage portion 54, the control portion 51 acquires an origin point of a standard surface 82 (virtual standard surface) parallel to the front surface 701 (a plane which passes through the first marker 71, the second markers 72, and the third marker 73) illustrated in Fig. 18, and each direction of the x axis, the y axis, and the z axis (step s4112). In addition, the control device 5 defines the position and the posture of the standard surface 82 in the robot coordinate system, that is, the components xr, yr, zr, ur, vr, and wr of the standard surface 82 (step S4113).

As described above, according to the control device 5, an effect similar to that of the processing of specifying the standard surface in the above-described calibration of the second fixed camera 2 (step S31) can be achieved. In other words, since the images (the first image, the second image, and the third image) captured by the mobile camera 3 (imaging portion) are used, it is possible to acquire the posture of the standard surface 82 without coming into contact with the calibration member 70, and accordingly, for example, it is possible to acquire the posture of the standard surface 82 with high accuracy regardless of the material or the like of the calibration member 70. In addition, it is possible to more easily and rapidly acquire the posture of the standard surface 82 than the related art.

In addition, as described above, in the embodiment, the position and the posture of the standard surface 82 are acquired based on the size of the first marker 71 in the first image, the size of the second marker 72 in the second image, and the size of the third marker 73 in the third image. Therefore, in the embodiment, when the position and the posture of the standard surface 82 are acquired based on the size of the second marker 72 in each image, it is possible to accurately acquire the posture of the standard surface 82.

In addition, the acquiring of the position and the posture of the standard surface 82 based on the size of the second marker 72 in each image, is the same as the acquiring of the posture of the standard surface 82, based on a distance (first distance) between the first marker 71 when the first image is obtained and the light receiving surface 311 (more specifically, imaging standard point 03) of the mobile camera 3, a distance (second distance) between the second marker 72 when the second image is obtained and the light receiving surface 311 (imaging standard point 03), and a distance (third distance) between the third marker 73 when the third image is obtained and the light receiving surface 311 (imaging standard point O3). Therefore, according to the calibration method of the embodiment, it is possible to acquire the posture of the standard surface 82 based on the distance of the first distance, the second distance, and the third distance.

Furthermore, as described above, by using the calibration member 70 to which the first marker 71, the second marker 72, and the third marker 73 of which the sizes are the same as each other are attached, the first image, the second image, and the third image are captured by the second fixed camera 2 such that the sizes of the first marker 71, the second marker 72, and the third marker 73 are the same as each other on the image. According to the capturing, even when a focal length or an angle of view of the mobile camera 3 is not known, it is possible to acquire the standard surface 82 which is parallel (orthogonal to the optical axis OA3 of the mobile camera 3) to the front surface 701.

In addition, the capturing of the first image, the second image, and the third image by the mobile camera 3 such that the sizes of the first marker 71, the second marker 72 and the third marker 73 are the same as each other, is the same as the acquiring of the posture of the standard surface 82 based on the first distance, the second distance, and the third distance which are the same as each other. Therefore, based on the first distance, the second distance, and the third distance which are the same as each other, even when the focal length or the angle of view of the mobile camera 3 is not known, it is possible to easily and rapidly acquire the standard surface 82 parallel to the front surface 701.

In addition, in the embodiment, each of the sizes of the first marker 71, the second marker 72, and the third marker 73 is the same as each other, but when the relationship between the sizes is known, the sizes may respectively vary. In this case, based on the relationship of the sizes of each of the first marker 71, the second marker 72, and the third marker 73, by acquiring the distance of the first distance, the second distance, and the third distance, it is possible to easily and rapidly acquire the standard surface 82 parallel to the front surface 701.

Calibration of Mobile Camera 3 on Inspection Stand 62 (Step S5)

Next, the control device 5 starts the calibration of the mobile camera 3 on the inspection stand 62 (step S5) illustrated in Fig. 5.

As illustrated in Fig. 20, in the calibration of the mobile camera 3 on the inspection stand 62 (step S5), the processing of acquiring the offset components (step S51), the processing of specifying the inspection surface (step S52), the processing of instructing the position and the posture of the marker to the robot 1 (step S53), and the processing of acquiring the relationship between the image coordinate system of the mobile camera 3 and the robot coordinate system (step S54), are performed in order.

Processing of Acquiring Offset Components (Step S51)

Next, the processing of acquiring the offset components (step S51), that is, the fourth work of calculating the distance between the mobile camera 3 which is the first imaging portion and the axial coordinates 06 which is the standard point included in the robot 1, will be described with reference to the flowchart illustrated in Fig. 21.

Here, as described above, on the design, the mobile camera 3 is offset and attached to the sixth arm 16 such that the optical axis OA3 is substantially parallel to the rotation axis A6 of the sixth arm 16. However, practically, a shift is generated from the offset component (the position and the posture of the mobile camera 3 with respect to the sixth arm 16) on the design. The shift is, for example, generated by an assembly error of the mobile camera 3 or an assembly error or the like of the imaging element 31 with respect to a housing of the mobile camera 3. Here, in the processing of acquiring the offset components (step S51), actual offset components (the position and the posture of the mobile camera 3 with respect to the sixth arm 16) are acquired.

In the following processing of acquiring the offset components (step S51), the offset components ($\Delta x$, $\Delta y$, $\Delta z$, $\Delta u$, $\Delta v$, and $\Delta w$) of the position of the imaging standard point O3 and the direction (posture) of the optical axis OA3 of the mobile camera 3 with respect to the axial coordinates 06 of the rotation axis member 161, are acquired.

In addition, in the embodiment, the offset components of the position of the imaging standard point 03 and the direction of the optical axis OA3 with respect to the axial coordinates 06 are acquired, but the location which becomes a standard when acquiring the offset components is arbitrary not being limited to the axial coordinates 06 and the imaging standard point 03.

As illustrated in Fig. 21, when the processing of acquiring the offset (step S51) is started, first, the control device 5 drives the robot arm 10, and detects the calibration member 70 by the mobile camera 3 (step S511).

Next, the control device 5 drives the robot arm 10 such that the light receiving surface 311 of the mobile camera 3 faces the front surface 701 of the calibration member 70 (step S512).

Next, the control device 5 verifies a degree of parallelization of the front surface 701 of the calibration member 70 with respect to the light receiving surface 311 of the mobile camera 3 (step S513). In addition, the control device 5 determines whether or not the degree of parallelization is in the predetermined threshold value (step S514).

As illustrated in Fig. 22, the degree of parallelization is verified by using a difference in pitches P between the adjacent markers 75 attached to the front surface 701 in the image. For example, as illustrated by a solid line in Fig. 22, the differences in pitches P1, P2, P3, and P4 between the adjacent markers 75 are substantially the same as each other, and in a case where the difference is in the predetermined threshold value, the process moves to step S515. Meanwhile, as illustrated by a two-dot chain line in Fig. 22, a difference in pitches P1', P2', P3', and P4' between the adjacent markers 75 varies, and in a case where the difference exceeds the predetermined threshold value, step S511 to step S514 are repeated until the difference becomes in the predetermined threshold value. Here, being in the predetermined threshold value means that the above-described standard surface 82 and the optical axis OA3 are perpendicular to each other in the threshold value.

Next, when it is determined that the difference is in the predetermined threshold value, the control device 5 acquires offset components $\Delta u$, $\Delta v$, and $\Delta w$ (step S515) from the difference between the components ur, vr, and wr of the axial coordinates 06 in the robot coordinate system when it is determined that the difference is in the threshold value, and the components ur, vr, and wr of the standard surface 82 in the robot coordinate system when the standard surface 82 is acquired in specifying the standard surface which corresponds to the inspection surface 621 of the inspection stand 62 (step S4). The offset components $\Delta u$, $\Delta v$, and $\Delta w$ correspond to the offset components $\Delta u$, $\Delta v$, and $\Delta w$ of the optical axis OA3 with respect to the axial coordinates 06.

Next, as illustrated in Fig. 21, the control device 5 acquires the offset components $\Delta x$ and $\Delta y$ of the imaging standard point 03 with respect to the axial coordinates 06 (step S516). Hereinafter, a method of acquiring the offset components $\Delta x$ and $\Delta y$ will be described with reference to Figs. 23 to 27. In addition, Figs. 23 to 27 schematically illustrate, for example, the mobile camera 3 and the sixth arm 16 when the robot 1 is viewed from the upper part in the vertical direction.

Specifically, first, as illustrated in Fig. 23, the control device 5 drives the robot arm 10 such that the second marker 72 is positioned at a center 030 (centroid) of an image 30 of the mobile camera 3. A state of the mobile camera 3 and the sixth arm 16 illustrated in Fig. 23 is "first state". Here, the center 030 of the image 30 and imaging standard point 03 match each other.

Next, as illustrated in Fig. 24, the control device 5 drives the robot arm 10 and rotates the sixth arm 16 around the rotation axis A6 by a predetermined angle. The predetermined angle at this time is a predetermined angle (for example, approximately 1° to 10°) in a range (in a range of being contained in an imaging region of the mobile camera 3) in which the second marker 72 does not go out of the image 30. A state of the mobile camera 3 and the sixth arm 16 illustrated in Fig. 24 is "second state".

Next, as illustrated in Fig. 25, the control device 5 drives the robot arm 10 and translationally moves the mobile camera 3 and the sixth arm 16 in a plane parallel to the plane (x-y plane of the standard surface 82) including the xr axis and the yr axis in the robot coordinate system such that the second marker 72 matches the center 030. A state of the mobile camera 3 and the sixth arm 16 illustrated in Fig. 25 is "third state".

It is ascertained that the movement of the mobile camera 3 and the sixth arm 16 which are in the third state via the second state from the first state, is the same as the rotation of the axial coordinates 06 (sixth arm 16) around a line segment which passes through the center 030 (imaging standard point 03) as a rotation center axis when the first state illustrated in Fig. 23 and the third state illustrated in Fig. 25 are viewed. Therefore, as illustrated in Fig. 28, the movement to the third state via the second state from the first state, is the same as the movement of the axial coordinates 06 around the line segment which passes through the center 030 as a rotation center axis (imaging standard point 03) by a rotation angle $\theta 10$. Therefore, based on the rotation angle $\theta 10$, the coordinates of the axial coordinates 06 in the robot coordinate system in a first state, and the coordinates of the axial coordinates 06 in the robot coordinate system in the third state, the coordinates of the imaging standard point 03 in the robot coordinate system is acquired. In addition, from the acquired coordinates of the imaging standard point 03 in the robot coordinate system and the coordinates of the axial coordinates 06 in the robot coordinate system in any one of the first state and the third state, virtual offset components $\Delta x'$ and $\Delta y'$ of the imaging standard point 03 with respect to the axial coordinates 06 are acquired.

Next, as illustrated in Fig. 26, the control device 5 drives the robot arm 10 based on the virtual offset components $\Delta x'$ and $\Delta y'$ such that the second marker 72 does not go out of the image 30, and rotates the axial coordinates 06 around the line segment which passes through the imaging standard point 03 (center O30) as a rotation center axis by the predetermined angle. A state of the mobile camera 3 and the sixth arm 16 illustrated in Fig. 22 is "fourth state".

Next, as illustrated in Fig. 27, the control device 5 translationally moves the mobile camera 3 and the sixth arm 16 in a plane parallel to a plane (x-y plane of the standard surface 82) including the xr axis and the yr axis in the robot coordinate system by the driving of the robot arm 10, and positions the second marker 72 to the center 030 of the image 30. A state of the mobile camera 3 and the sixth arm 16 illustrated in Fig. 27 is "fifth state".

It is ascertained that the movement of the mobile camera 3 and the sixth arm 16 which are in the fifth state via the second state, the third state, and the fourth state from the first state, is the same as the rotation of the axial coordinates 06 around the line segment which passes through the center 030 (imaging standard point 03) as a rotation center axis when the first state illustrated in Fig. 23 and the fifth state illustrated in Fig. 27 are viewed. Therefore, as illustrated in Fig. 28, the movement to the fifth state via the second state, the third state, and the fourth state from the first state, is the same as the movement of the axial coordinates 06 around the line segment which passes through the center 030 (imaging standard point 03) as a rotation center axis by a rotation angle θ1. Therefore, based on the rotation angle θ1, the coordinates of the axial coordinates 06 in the robot coordinate system in a first state, and the coordinates of the axial coordinates 06 in the robot coordinate system in the fifth state, the coordinates of the imaging standard point 03 in the robot coordinate system is acquired. In addition, from the acquired coordinates of the imaging standard point 03 in the robot coordinate system and the coordinates of the axial coordinates 06 in the robot coordinate system in any one of the first state and the fifth state, the offset components Δx and Δy of the imaging standard point 03 with respect to the axial coordinates 06 are acquired.

According to the processing, it is possible to easily acquire the offset components Δx and Δy of the imaging standard point 03 with respect to the axial coordinates 06 with high accuracy.

In addition, as described above, in the embodiment, by performing the processing of transiting to the third state via the second state from the first state, the virtual offset components Δx' and Δy' are computed. In other words, by rotating the sixth arm 16 around the rotation axis A6 by an extremely small angle which is in a range where the second marker 72 is contained in the image 30 (in the imaging region) of the mobile camera 3, the virtual offset components Δx' and Δy' are computed. By performing the movement from the third state to the fourth state by using information of the virtual offset components Δx' and Δy', it is possible to surely give the second marker 72 to the inside of the image 30 in the fourth state.

Next, as illustrated in Fig. 21, the control device 5 acquires an offset component Δz of the imaging standard point 03 with respect to the axial coordinates 06 (step S517). Hereinafter, a method of acquiring the offset component Δz will be described with reference to Fig. 29. In addition, Fig. 29 illustrates a process of the mobile camera 3 and the sixth arm 16 when the offset component Δz is acquired, and for convenience of the description, the mobile camera 3 illustrated by a solid line in Fig. 29 is illustrated at a position of "mobile camera 3 on the design", and a mobile camera 3' illustrated by a dotted line in Fig. 29 is illustrated at a position of "actual mobile camera 3".

As illustrated in Fig. 29, first, for example, the control device 5 drives the robot arm 10 such that the second marker 72 is given to the center of the image of the mobile camera 3', and a state A illustrated in Fig. 29 is achieved. Next, the control device 5 captures the second marker 72 by the mobile camera 3', and acquires a distance H between the light receiving surface 311 of the mobile camera 3 and the second marker 72 which are illustrated in Fig. 29.

Here, in the embodiment, the focal length of the mobile camera 3 is acquired in advance, and is known. Therefore, the distance H can be computed, for example, from the focal length of the mobile camera 3, "pixel" which is the length of the pitches between the markers 75 in the image of the mobile camera 3, and "mm" which is the pitches between the actual markers 75.

In addition, the focal length of the mobile camera 3 can also be acquired, for example, from "pixel" which is the length of the pitches between the markers 75 on the image, and "mm" which is the pitches between the actual markers 75, before and after the operation in a case where the mobile camera 3 is moved only by an extremely small amount in the optical axis OA3 direction (zr direction) while photographing the marker 75 of the calibration member 70.

Next, as illustrated in a state B in Fig. 29, the control device 5 drives the robot arm 10, and allows the mobile camera 3' to be inclined only by an angle θ2 based on the offset component Δz on the design.

Next, as illustrated in a state C in Fig. 29, the control device 5 drives the robot arm 10, and translationally moves the mobile camera 3' in a plane parallel to a plane (x-y plane of the standard surface 82) including the xr axis and the yr axis in the robot coordinate system such that the second marker 72 is photographed to the center of the image of the mobile camera 3' while maintaining a posture of the mobile camera 3' of the state B. In addition, the control device 5 acquires a moving distance X' (specifically, a moving distance of the imaging standard point 03 in a plane parallel to the x-y plane of the standard surface 82 based on the offset component Δz on the design) of the axial coordinates 06 in the robot coordinate system at this time.

Next, the control device 5 acquires a correction amount ΔH for acquiring the actual offset component Δz of the mobile camera 3' by the following equation (1).

$$\Delta H = \frac{X'}{\tan\theta2} - H \quad \cdots (1)$$

Next, the control device 5 acquires the actual offset component Δz based on the correction amount ΔH and the offset component Δz on the design.

In this manner, it is possible to acquire the offset component Δz. According to the processing, it is possible to easily compute the offset component Δz.

Next, as illustrated in Fig. 21, the control device 5 updates data to the acquired actual offset components Δx, Δy, Δz, Δu, Δv, and Δw, from the offset components on the design (step S518).

Above, the processing of acquiring the offset (step S51) illustrated in Fig. 20 is finished.

Processing of Specifying Inspection Surface (Step S52)

Next, as illustrated in Fig. 20, the processing of specifying the inspection surface (step S52) is performed. The processing of specifying the inspection surface (step S52) is processing of acquiring the position and the posture of the inspection surface 621 in the robot coordinate system, that is, processing of acquiring components xr, yr, zr, ur, vr, and wr of the inspection surface 621.

Here, the inspection surface 621 is parallel to the standard surface 82, and is at a position offset in the normal line direction (zr direction) of the standard surface 82. Therefore, in the processing of specifying the inspection surface (step S52), by determining the offset amount in the normal line direction (zr direction) with respect to the standard surface 82 of the inspection surface 621, it is possible to acquire the components xr, yr, zr, ur, vr, and wr of the inspection surface 621.

The offset amount in the normal line direction (zr direction) with respect to the standard surface 82 of the inspection surface 621 can be acquired based on the focal length of the mobile camera 3 acquired in advance, the number of pixels of the mobile camera 3 with respect to a value (actual size) of the pitches between the adjacent markers 75 of the calibration member 70, and the actual offset component described above.

By acquiring the position and the posture of the inspection surface 621 in the robot coordinate system in this manner, the robot 1 can perform the work with respect to the target 60 mounted on the inspection surface 621 with high accuracy.

Processing of Instructing Position and Posture of Marker to Robot (Step S53)

Next, as illustrated in Fig. 20, the processing of instructing the position and the posture of the marker to the robot 1 (step S53) is performed.

Here, for example, the robot coordinate of the second marker 72 in the x-y plane of the standard surface 82 (or inspection surface 621) is instructed to the robot 1.

Specifically, first, the control device 5 aligns the optical axis OA2 of the mobile camera 3 to the z axis of the standard surface 82, based on the position of the imaging standard point 03 and the offset component in the direction of the optical axis OA3 with respect to the axial coordinates 06 computed by the above-described processing of acquiring the offset components (step S51). After this, the control device 5 translationally moves the mobile camera 3 in the plane parallel to the x-y plane of the standard surface 82 by the driving of the robot arm 10, and allows the second marker 72 to match the center of the image of the mobile camera 3. In addition, the control device 5 instructs the position of the imaging standard point 03 of the mobile camera 3 as the robot coordinate of the second marker 72 when the second marker 72 matches the center of the image of the mobile camera 3.

In addition, for example, by bringing an instruction tool (touch-up hand) of which the offset in the axial coordinates 06 is known into contact with the second marker 72, the position and the posture of the second marker 72 may be instructed to the robot 1. However, by capturing the image of the second marker 72 by the mobile camera 3, it is preferable to instruct the position and the posture of the second marker 72 to the robot 1, for example, since it is possible to instruct the second marker 72 with high accuracy regardless of the material or the like of the calibration member 70.

Processing of Acquiring Relationship between Image Coordinate System of Mobile Camera and Robot Coordinate System (Step S54)

Next, as illustrated in Fig. 20, the first work of performing the processing of acquiring the relationship between the image coordinate system of the mobile camera and the robot coordinate system (step S54), that is, the calibration of the coordinate system of the mobile camera 3 which is the first imaging portion and the coordinate system of the robot 1, is performed.

The processing of acquiring the relationship between the image coordinate system of the mobile camera and the robot coordinate system (step S54) is similar to the above-described processing of acquiring the relationship between the image coordinate system of the fixed camera and the robot coordinate system (step S32) except that the standard surface is specified by using the calibration member 70 disposed on the inspection surface 621, and the second marker 72 (marker of which the robot coordinates are known) of the calibration member 70 installed on the inspection surface 621 is captured nine times while moving the mobile camera 3 to nine locations by driving the robot arm 10.

Therefore, when the processing of acquiring the relationship between the image coordinate system of the mobile camera 3 and the robot coordinate system (step S54) is finished, it is possible to acquire the correction parameter (coordinate conversion matrix) which converts the image coordinate of the second fixed camera 2 into the coordinate of the standard surface 82 in the robot coordinate system based on the coordinates (components xb, yb, and ub) of the second marker 72 in the image coordinate system of the mobile camera 3 based on the nine images, and the coordinates (components xr, yr, and ur) of the standard surface 82 in the robot coordinate system acquired by specifying the standard surface which corresponds to the inspection surface 621 of the inspection stand 62 (step S4).

When the correction parameter acquired in this manner is used, it is possible to convert the position and the posture (specifically, components xb, yb, and ub) of the target 60 or the like captured by the mobile camera 3 into a value (specifically, components xr, yr, and ur) in the robot coordinate system.

In addition, as described above, since the processing of acquiring the relationship between the image coordinate system of the mobile camera and the robot coordinate system (step S54) is substantially similar to the above-described processing of acquiring the relationship between the image coordinate system of the second fixed camera 2 and the robot coordinate system (step S32), specific description (processing contents and effects) thereof will be omitted.

Calibration of Third Fixed Camera 9 (Step S6)

Next, as illustrated in Fig. 5, the control device 5 starts the calibration of the third fixed camera 9 (step S6),

The calibration of the third fixed camera 9 (step S6) is similar to the above-described calibration of the second fixed camera 2 (step S3) except for performing of the calibration by the third fixed camera 9 instead of the second fixed camera 2. Therefore, even in the calibration of the third fixed camera 9, after performing the processing of specifying the standard surface, the processing of acquiring the relationship between the image coordinate system of the third fixed camera 9 and the robot coordinate system is performed (refer to Fig. 15).

Therefore, when finishing the calibration of the third fixed camera 9 (step S6), it is possible to acquire the calibration parameter (coordinate conversion matrix) which converts the image coordinates of the third fixed camera 9 into the coordinates of the standard surface 81 in the robot coordinate system. Accordingly, it is possible to convert the position and the posture (specifically, components $x_c$, $y_c$, and $u_c$) of the target 60 or the like captured by the third fixed camera 9 into the values (specifically, components $x_r$, $y_r$, and $u_r$) in the robot coordinate system.

In addition, as described above, since the calibration of the third fixed camera 9 (step S6) is similar to the above-described calibration of the second fixed camera 2 (step S3) except for the performing of the calibration by the third fixed camera 9 instead of the second fixed camera 2, specific description (processing contents and effects) thereof will be omitted.

Above, the calibration of the imaging portion illustrated in Fig. 5 is finished.

According to the calibration method of the imaging portion, since it is possible to acquire the postures of the standard surfaces 81 and 82 based on the images which are respectively captured by the second fixed camera 2, the third fixed camera 9, and the mobile camera 3, it is possible to omit the determination by the worker unlike the related art. Therefore, it is possible to reduce a human error or variation caused by the worker, and accordingly, it is possible to perform the calibration with high accuracy.

Above, the control device, the robot, and the robot system according to the invention are described based on the embodiments illustrated in the drawings, but the invention is not limited thereto, and configurations of each portion can be replaced with arbitrary configurations having similar functions. In addition, other arbitrary configuration elements may be added. In addition, the invention may be combined with two or more arbitrary configurations (characteristics) among each of the above-described embodiments.

In addition, in the embodiment, a case where 6-axis vertical articulated robot is used is described as an example, but the robot according to the invention may be a robot other than the vertical articulated robot, for example, a horizontal articulated robot. In addition, the horizontal articulated robot has a configuration in which a base; a first arm which is connected to the base, and extends in the horizontal direction; and a second arm which is connected to the first arm, and has a part that extends in the horizontal direction are provided. In addition, in a case where the robot according to the invention is the horizontal articulated robot, by performing the calibration as described above, for example, it is possible to ascertain whether or not the robot is installed in parallel to the work surface, or whether or not the fixed camera is installed such that the optical axis of the fixed camera is vertical to the surface including the xr axis and the yr axis in the robot coordinate system.

In addition, in the embodiment, the number of rotating axes of the robot arm of the robot is six, but in the invention, not being limited thereto, and the number of rotating axes of the robot arm may be, for example, two, three, four, five, seven, or more. In addition, in the embodiment, the number of arms of the robot is six, but in the embodiment, not being limited thereto, and the number of arms of the robot may be, for example, two, three, four, five, seven or more.

In addition, in the embodiment, the number of robot arms of the robot is one, but in the invention, not being limited thereto, and the number of robot arms of the robot may be, for example, two or more. In other words, the robot may be a robot having a plurality of arms, such as a double arm robot.

In addition, in the embodiment, two cameras, such as the fixed camera and the mobile camera which are the imaging portions are respectively configured to include the imaging element and the lens, but the imaging portion in the invention may have any configuration as long as the first marker, the second marker, and the third marker can be captured by the configuration.

In addition, in the embodiment, the calibration of the fixed camera is performed by using the calibration member, but in the calibration of the fixed camera, the calibration member may not be used. In a case where the calibration member is not used, for example, one marker may be attached to the tip end part (axial coordinates) of the robot arm, and the first marker may be used as the standard marker. In this case, one marker serves as "first standard marker, second standard marker, and third standard marker".

In addition, in the embodiment, the second imaging portion is described as the second fixed camera, and the third imaging portion is described as the third fixed camera, but the second imaging portion may function as the third fixed camera, and the third imaging portion may function as the second fixed camera. In addition, in addition to the first imaging portion, the second imaging portion, and the third imaging portion, an imaging portion which is different from these may further be provided.

**Claims**

1. A control device (5) comprising:

   a control portion (51) which is configured to operate a robot (1) including a movable portion (10) capable of being provided with an end-effector (102) that works with respect to a target (60); and a receiving portion (52) which is configured to receive an input command and to output a signal based on the received input command to the control portion (51),
   wherein the control portion (51) is capable of allowing the robot (1) to perform two or more works selected from

   - a first work of performing calibration between a coordinate system of a first imaging portion (3) having an imaging function and a coordinate system of the robot (1),
   - a second work of performing calibration between a coordinate system of a second imaging portion (2) having an imaging function and a coordinate system of the robot (1),
   - a third work of calculating a posture of a virtual standard surface that corresponds to a work surface on which the robot (1) works,
   - a fourth work of calculating a distance between the first imaging portion (3) and a standard point of the robot (1), and
   - a fifth work of calculating a distance between the end-effector (102) and the standard point, based on one input command received by the receiving portion (52).

2. The control device (5) according to claim 1, wherein the first imaging portion (3) is provided in the movable portion (10).

3. The control device (5) according to claim 1 or 2, wherein the second imaging portion (2) is provided at a place other than the movable portion (10).

4. The control device (5) according to any one of claims 1 to 3, wherein the control portion (51) is capable of allowing the robot (1) to perform the first work, the second work, the third work, the fourth work, and the fifth work, based on the one input command received by the receiving portion (52).

5. The control device (5) according to any one of the preceding claims, wherein the receiving portion (52) is capable of receiving an instruction that at least one of the first work, the second work, the third work, the fourth work, and the fifth work is not selectively performed.

6. The control device (5) according to any one of the preceding claims, wherein the control portion (51) outputs a signal that displays a setting screen for setting the work contents of each of the first work, the second work, the third work, the fourth work, and the fifth work, based on the one input command received by the receiving portion (52).

7. The control device (5) according to any one of the preceding claims,
   wherein the end-effector (102) is attached to a member included in the movable portion (10),
   wherein the member included in the movable portion (10) is rotatable around a rotation axis, and
   wherein the standard point is positioned on the rotation axis.

8. A robot (1) which is configured so as to be controlled by the control device (5) according to any one of the preceding claims.

9. A robot system comprising:

   the control device (5) according to any one of claims 1 to 7; and
   a robot (1) which is configured to be controlled by the control device (5).

FIG. 1

EP 3 272 472 A2

FIG. 2

EP 3 272 472 A2

FIG. 3

FIG. 4

START

CALIBRATION OF MOBILE CAMERA ON SUPPLY STAND — S1

CALIBRATION OF TOOL — S2

CALIBRATION OF SECOND FIXED CAMERA — S3

SPECIFYING STANDARD SURFACE
WHICH CORRESPONDS TO
INSPECTION SURFACE OF INSPECTION STAND — S4

CALIBRATION OF MOBILE CAMERA ON INSPECTION STAND — S5

CALIBRATION OF THIRD FIXED CAMERA — S6

FINISH

FIG. 5

WD2

**Calibration Main Window**   _ □ X

Vision Calibration procedure

Execute Calibration of checked steps

B22 — Step by step execution | Continuous execution — B21

Check all

C461 — ☐ 1. Vision Calibration Cam #1 (Mobile J6) for Pickup place
   1) Put Calibration mark (A) on Pickup place
   2) Execute Tool Set of Cam #1 (Auto)
   3) Execute Cam #1 Vision Calibration (Mobile J6) (Auto)
   Execute Cam #1 Calib (1) — 461

C462 — ☐ 2. Tool Set of End-effector (by Cam #2)
   1) Attach Calibration mark (B) to End-effector
   2) Execute Tool Set of End-effector (Auto)
   Execute TL Set — 462

C463 — ☐ 3. Vision Calibration Cam #2 (Fixed Upward)
   1) Attach Calibration mark (B) to End-effector
   2) Execute Cam #1 Vision Calibration (Auto)
   Execute Cam #2 Calib — 463

C464 — ☐ 4. Local Plane Calibration of Inspection stage (by Cam #1)
   1) Place Calibration plate (A) on Inspection stage
   2) Execute Local plane Calibration (Auto)
   Execute Stage Calib — 464

C465 — ☐ 5. Vision Calibration Cam #1 (Mobile J6) for Inspection stage
   1) Place Calibration plate (A) on Inspection stage
   2) Execute Cam #1 Vision Calibration (by using Cam #1 Tool Set)(Auto)
   Execute Cam #1 Calib(2) — 465

C466 — ☐ 6. Vision Calibration Cam #3 (Fixed Upward)
   1) Place Calibration plate (B) on Inspection stage
   2) Execute Cam #3 Calibration (Auto)
   Execute Cam #3 Calib — 466

## FIG. 6

Camera #1 Calibration — 473 · 471 · WD3 · ✕

**1.Settings**

| | |
|---|---|
| Camera No. | 1 |
| Target Vision Calibration | Cal_Cam1 ▽ |
| Target Vision Sequence | Seq_Cal_Cam1 ▽ |
| Vision Obj for Vis Seq. | Geom01 ▽ |
| Light Brightness (000-255) | Set |
| Light On/Off | ☐ #1  ☐ #2  ☐ #3 |
| Rotate angle when Calibration(deg) | 90 |
| Tool No.of Cam #1 center | 1 ▽ |
| Distance btw Cam #1 Image sensor and J6 flange (mm) | 0 |
| Move Calib plane (Local) | 3 ▽ |

**2.Calibration** — 472

1) If not teaching yet or want to check, please press the below button and check if Calib plate #1 at Cam #2 FOV center.

Point date for Start Position by Tool #0    Pos_Cal_Cam1_TLO ▽

Jog & Teach (Robot Manager) — B31

2) If Vision Sequence is not set or requires checking, please press this button.

Open Vision Guide — B32

3) Please press the below button.    Execute Calibration — B33

FIG. 7

FIG. 8

FIG. 9

FIG.10

O6

20

FIG.11

O20        72

O6

20

FIG.12

O20        72

O6

20

FIG.13

O20        72

FIG.14

FIG.15

START OF PROCESSING OF SPECIFYING STANDARD SURFACE

ALLOW CALIBRATION MEMBER TO OPPOSE FIXED CAMERA — S311

MOVE CALIBRATION MEMBER SUCH THAT SECOND MARKER IS POSITIONED AT CENTER PART OF IMAGE OF FIXED CAMERA — S312

CAPTURE SECOND MARKER BY FIXED CAMERA — S313

STORE FIRST IMAGE AND COORDINATE OF AXIAL COORDINATES IN ROBOT COORDINATE SYSTEM — S314

MOVE CALIBRATION MEMBER — S315

CAPTURE SECOND MARKER BY FIXED CAMERA — S316

COMPARE SHAPE AND SIZE OF SECOND MARKER AND SHAPE AND SIZE OF SECOND MARKER IN FIRST IMAGE WITH EACH OTHER — S317

IS DIFFERENCE IN PREDETERMINED THRESHOLD VALUE ? — S318

YES

NO

MOVE CALIBRATION MEMBER TO BE IN PREDETERMINED THRESHOLD VALUE — S319

STORE N-TH IMAGE AND COORDINATES OF AXIAL COORDINATES IN ROBOT COORDINATE SYSTEM — S3110

IS N PREDETERMINED NUMBER ? — S3111

NO

YES

CALCULATE ORIGINAL POINT OF STANDARD SURFACE AND EACH DIRECTION OF X AXIS, Y AXIS, AND Z AXIS — S3112

DEFINE POSITION AND POSTURE OF STANDARD SURFACE — S3113

FINISH PROCESSING OF SPECIFYING STANDARD SURFACE

FIG.16

FIG.17

FIG.18

( START SPECIFYING OF STANDARD SURFACE )

| ALLOW MOBILE CAMERA TO OPPOSE CALIBRATION MEMBER | ~S411 |

| MOVE MOBILE CAMERA WITH RESPECT TO CALIBRATION MEMBER SUCH THAT FIRST MARKER IS POSITIONED AT CENTER PART OF IMAGE OF MOBILE CAMERA | ~S412 |

| CAPTURE FIRST MARKER BY MOBILE CAMERA | ~S413 |

| STORE FIRST IMAGE AND COORDINATES OF AXIAL COORDINATES IN ROBOT COORDINATE SYSTEM | ~S414 |

| MOVE MOBILE CAMERA WITH RESPECT TO CALIBRATION MEMBER SUCH THAT N-TH MARKER IS POSITIONED AT CENTER PART OF IMAGE OF MOBILE CAMERA | ~S415 |

| CAPTURE N-TH MARKER BY MOBILE CAMERA | ~S416 |

| COMPARE SHAPE AND SIZE OF N-TH MARKER AND SHAPE AND SIZE OF FIRST MARKER IN FIRST IMAGE WITH EACH OTHER | ~S417 |

S418
IS DIFFERENCE IN PREDETERMINED THRESHOLD VALUE ?

YES

NO

| MOVE CALIBRATION MEMBER TO BE IN PREDETERMINED THRESHOLD VALUE | ~S419 |

| STORE N-TH IMAGE AND COORDINATES OF AXIAL COORDINATES IN ROBOT COORDINATE SYSTEM | ~S4110 |

S4111
IS N PREDETERMINED NUMBER ?   NO

YES

| CALCULATE ORIGINAL POINT OF STANDARD SURFACE AND EACH DIRECTION OF X AXIS, Y AXIS, AND Z AXIS | ~S4112 |

| DEFINE POSITION AND POSTURE OF STANDARD SURFACE | ~S4113 |

( FINISH SPECIFYING OF STANDARD SURFACE )

FIG.19

START CALIBRATION OF MOBILE CAMERA

PROCESSING OF ACQUIRING OFFSET COMPONENTS — S51

PROCESSING OF SPECIFYING INSPECTION SURFACE — S52

PROCESSING OF INSTRUCTING POSITION AND POSTURE OF MARKER TO ROBOT — S53

PROCESSING OF ACQUIRING RELATIONSHIP BETWEEN IMAGE COORDINATE SYSTEM OF MOBILE CAMERA AND ROBOT COORDINATE SYSTEM — S54

FINISH CALIBRATION OF MOBILE CAMERA

FIG.20

START OF PROCESSING OF ACQUIRING OFFSET COMPONENTS

ALLOW MOBILE CAMERA TO DETECT CALIBRATION MEMBER — S511

DRIVE ROBOT ARM SUCH THAT LIGHT RECEIVING SURFACE OF MOBILE CAMERA FACES CALIBRATION MEMBER — S512

VERIFY DEGREE OF PARALLELIZATION OF CALIBRATION MEMBER WITH RESPECT TO LIGHT RECEIVING SURFACE OF MOBILE CAMERA — S513

S514

DETERMINE WHETHER OR NOT DEGREE OF PARALLELIZATION IS IN THE PREDETERMINED THRESHOLD VALUE ?   NO

YES

ACQUIRE OFFSET COMPONENTS $\Delta u$, $\Delta v$, AND $\Delta w$ — S515

ACQUIRE OFFSET COMPONENTS $\Delta x$ AND $\Delta y$ — S516

ACQUIRE OFFSET COMPONENT $\Delta z$ — S517

UPDATE OFFSET COMPONENTS $\Delta x$, $\Delta y$, $\Delta z$, $\Delta u$, $\Delta v$, AND $\Delta w$ — S518

FINISH PROCESSING OF ACQUIRING OFFSET COMPONENTS

FIG.21

FIG.22

FIG.23

FIG.24

FIG.25

FIG.26

FIG.27

FIG.28

FIG.29

**EP 3 272 472 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8210816 A